(19) **Europäisches Patentamt / European Patent Office / Office européen des brevets**

(11) **EP 4 633 276 A1**

(12) **EUROPEAN PATENT APPLICATION**
published in accordance with Art. 153(4) EPC

(43) Date of publication:
**15.10.2025 Bulletin 2025/42**

(21) Application number: **24744770.9**

(22) Date of filing: **04.01.2024**

(51) International Patent Classification (IPC):
**H04W 74/08** (2024.01)   **H04W 74/00** (2009.01)
**H04L 5/00** (2006.01)

(52) Cooperative Patent Classification (CPC):
**H04L 5/00; H04W 74/00; H04W 74/08**

(86) International application number:
**PCT/KR2024/000232**

(87) International publication number:
**WO 2024/154988 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.01.2023 KR 20230007675**

(71) Applicant: **Samsung Electronics Co., Ltd.
Suwon-si, Gyeonggi-do 16677 (KR)**

(72) Inventors:
- **LEE, Jonghyeuk
  Suwon-si Gyeonggi-do 16677 (KR)**
- **KIM, Hyuncheol
  Suwon-si Gyeonggi-do 16677 (KR)**

(74) Representative: **Gulde & Partner
Patent- und Rechtsanwaltskanzlei mbB
Berliner Freiheit 2
10785 Berlin (DE)**

(54) **ELECTRONIC DEVICE AND METHOD FOR OBTAINING NARROWBAND RANDOM ACCESS SIGNAL**

(57)     According to embodiments, a method performed by a device of a base station is provided. The method may comprise an operation of obtaining signals corresponding to multiple symbol groups of narrowband random access channel (NPRACH) transmission. The method may comprise an operation of determining inter-symbol correlation information for at least one symbol group among the multiple symbol groups. The method may comprise an operation of determining a frequency offset on the basis of the inter-symbol correlation information. The method may comprise an operation of obtaining a random access signal corresponding to the signals on the basis of the frequency offset. Symbols in a predetermined symbol group among the multiple symbol groups may correspond to the same subcarrier.

OBTAIN SIGNALS CORRESPONDING TO PLURALITY OF SYMBOL GROUPS OF NPRACH TRANSMISSION — 1001

DETERMINE INTER-SYMBOL CORRELATION INFORMATION FOR AT LEAST ONE SYMBOL GROUP — 1003

DETERMINE FREQUENCY OFFSET BASED ON INTER-SYMBOL CORRELATION INFORMATION — 1005

OBTAIN RANDOM ACCESS SIGNAL BASED ON FREQUENCY OFFSET — 1007

FIG. 10

EP 4 633 276 A1

**Description**

**[Technical Field]**

The following descriptions relate to an electronic device and a method for receiving a narrowband random access signal.

**[Background Art]**

In a mobile communication network, technology for narrowband (NB) Internet of Things (IoT) is used. NB-IoT technology has a low transmission speed due to a small bandwidth, but may provide wide coverage. NB-IoT technology enables low-cost IoT devices to support improved coverage and long battery life. In addition, NB-IoT technology may collect information data from many IoT devices with less power.

The above-described information may be provided as related art for the purpose of helping the understanding of the present disclosure. No claim or determination is raised as to whether any of the above-described content may be applied as prior art related to the present disclosure.

**[Disclosure]**

**[Technical Solution]**

In embodiments, a method performed by a device of a base station is provided. The method may comprise obtaining signals corresponding to a plurality of symbol groups of a narrowband random access channel (NPRACH) transmission. The method may comprise determining inter-symbol correlation information for at least one symbol group among the plurality of symbol groups. The method may comprise determining a frequency offset based on the inter-symbol correlation information. The method may comprise obtaining a random access signal corresponding to the signals based on the frequency offset. Symbols within each symbol group among the plurality of symbol groups may correspond to a same subcarrier.

In embodiments, a device of a base station is provided. The device may include memory, at least one transceiver, and at least one processor coupled to the memory and the at least one transceiver. The at least one processor may be configured to obtain signals corresponding to a plurality of symbol groups of a narrowband random access channel (NPRACH) transmission. The at least one processor may be configured to determine inter-symbol correlation information for at least one symbol group among the plurality of symbol groups. The at least one processor may be configured to determine a frequency offset based on the inter-symbol correlation information. The at least one processor may be configured to obtain a random access signal corresponding to the signals based on the frequency offset. Symbols within each symbol group among the plurality of symbol groups may correspond to a same subcarrier.

In embodiments, a digital unit (DU) is provided. The DU may comprise memory storing instructions, at least one transceiver, and at least one processor. The instructions, when executed by the at least one processor, may cause the DU to obtain signals corresponding to a plurality of symbol groups of a narrowband random access channel (NPRACH) transmission, determine inter-symbol correlation information for at least one symbol group among the plurality of symbol groups, determine a frequency offset based on the inter-symbol correlation information, and obtain a random access signal corresponding to the signals based on the frequency offset, wherein symbols within each symbol group among the plurality of symbol groups may correspond to a same subcarrier.

In embodiments, a non-transitory computer readable storage medium is provided. The non-transitory computer readable storage medium may store instructions that, when executed by a processor of a digital unit (DU), cause the DU to perform operations including obtaining signals corresponding to a plurality of symbol groups of a narrowband random access channel (NPRACH) transmission, determining inter-symbol correlation information for at least one symbol group among the plurality of symbol groups, determining a frequency offset based on the inter-symbol correlation information, and obtaining a random access signal corresponding to the signals based on the frequency offset. Symbols within each symbol group among the plurality of symbol groups may correspond to a same subcarrier.

**[Description of the Drawings]**

FIG. 1 illustrates a wireless communication system.
FIG. 2 illustrates a fronthaul interface.
FIG. 3 illustrates an example of a resource structure in time domain and frequency domain.

FIG. 4 illustrates an example of a random access procedure.

FIG. 5 illustrates an example of a narrowband physical random access channel (NPRACH) transmission.

FIG. 6 illustrates an example of frequency offset compensation.

FIGS. 7A to 7B illustrate an example of inter-symbol correlation information.

FIG. 8 illustrates an example of a calculation unit for calculating inter-symbol correlation information.

FIG. 9 illustrates functional blocks for determining a frequency offset based on inter-symbol correlation information.

FIG. 10 illustrates an operation flow of a device of a base station for obtaining a random access signal.

FIG. 11A illustrates a functional configuration of a distributed unit (DU) according to embodiments.

FIG. 11B illustrates a functional configuration of a radio unit (RU) according to embodiments.

**[Mode for Invention]**

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

In the following description, a term referring to a signal (e.g., signal, information, message, and signaling), a term referring to a resource (e.g., symbol, slot, subframe, radio frame, subcarrier, resource element (RE), resource block (RB), bandwidth part (BWP), and occasion), a term for a computational state (e.g., step, operation, and procedure), a term referring to data (e.g., packet, user stream, information, bit, symbol, and codeword), a term referring to a channel, a term referring to network entities, a term referring to a component of a device, and the like are illustrated for convenience of description. Therefore, the present disclosure is not limited to the terms described below, and other terms having the same technical meanings may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to' may be replaced with 'greater than', a condition described as 'less than or equal to' may be replaced with 'less than', and a condition described as 'greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

This disclosure describes various embodiments using terms used in some communication standards (e.g., 3rd Generation Partnership Project (3GPP), extensible radio access network (xRAN), open-radio access network (O-RAN)), but this is merely an example for explanation. Various Embodiments of the present disclosure may also be applied to other communication systems.

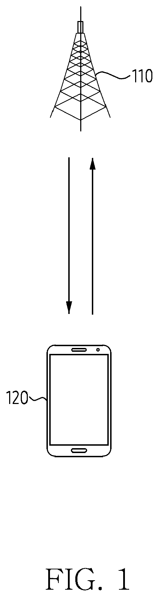

FIG. 1 illustrates an example of a wireless communication system.

Referring to FIG. 1, FIG. 1 illustrates a base station 110 and a terminal 120 as a portion of nodes using a wireless channel in a wireless communication system. Although FIG. 1 illustrates only one base station, the wireless communication system may further include another base station identical to or similar to the base station 110.

The base station 110 is a network infrastructure for providing wireless access to the terminal 120. The base station 110 has coverage defined based on a distance at which a signal may be transmitted. In addition to a base station, the base station 110 may be referred to as an 'access point (AP)', an 'eNode B (eNB)', a '5th generation node', a 'next generation node B (gNB)', a 'wireless point', a 'transmission/reception point (TRP)', or another term having a technical meaning equivalent thereto.

The terminal 120, which is a device used by a user, communicates with the base station 110 through the wireless channel. A link from the base station 110 to the terminal 120 is referred to as downlink (DL), and a link from the terminal 120 to the base station 110 is referred to as uplink (UL). In addition, although not illustrated in FIG. 1, the terminal 120 and another terminal may perform communication with each other through the wireless channel. In this case, a device-to-device link (D2D) between the terminal 120 and the other terminal is referred to as a sidelink, and the sidelink may be used interchangeably with a PC5 interface. In some other embodiments, the terminal 120 may be operated without user involvement. According to an embodiment, the terminal 120, which is a device that performs machine type communication (MTC), may not be carried by the user. In addition, according to an embodiment, the terminal 120 may be a narrowband (NB)-internet of things (IoT) device.

In addition to a terminal, the terminal 120 may be referred to as 'user equipment (UE)', 'customer premises equipment (CPE)', a 'mobile station', a 'subscriber station', a 'remote terminal', a 'wireless terminal', an 'electronic device', or another term having a technical meaning equivalent thereto.

The base station 110 may perform beamforming with the terminal 120. The base station 110 and the terminal 120 may transmit and receive a wireless signal in a relatively low frequency band (e.g., a frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3), or FR 3 of NR), and a mmWave band (e.g., 28GHz, 30GHz, 38GHz, or 60GHz). To improve a channel gain, the base station 110 and the terminal 120 may perform the beamforming. Herein, the beamforming may include transmission beamforming and reception beamforming. The base station 110 and the terminal 120 may assign directivity to a transmission signal or a reception signal. To this end, the base station 110 and the terminal 120 may select serving beams through a beam search or beam management procedure. After the serving beams are selected, subsequent communication may be performed through a resource that is in a QCL relationship with a resource that has transmitted the serving beams.

If large-scale characteristics of a channel transmitting a symbol on a first antenna port may be estimated from a channel transmitting a symbol on a second antenna port, the first antenna port and the second antenna port may be evaluated to be in the QCL relationship. For example, the large-scale characteristics may include at least one of a delay spread, a Doppler spread, a Doppler shift, an average gain, an average delay, and a spatial receiver parameter.

In FIG. 1, it has been described that both the base station 110 and the terminal 120 perform the beamforming, but embodiments of the present disclosure are not necessarily limited thereto. In some embodiments, the terminal may or may not perform the beamforming. Also, the base station may or may not perform the beamforming. That is, only one of the base station and the terminal may perform the beamforming, or both the base station and the terminal may not perform the beamforming.

In the present disclosure, a beam, which refers to a spatial flow of a signal in a wireless channel, may be formed by one or more antennas (or antenna elements), and this formation process may be referred to as beamforming. The beamforming may include at least one of analog beamforming or digital beamforming (e.g., precoding). A reference signal transmitted based on the beamforming may include, for example, a demodulation-reference signal (DM-RS), a channel state information-reference signal (CSI-RS), a synchronization signal/physical broadcast channel (SS/PBCH), and a sounding reference signal (SRS). In addition, IE such as a CSI-RS resource or an SRS-resource, and the like, may be used as a configuration with respect to each reference signal, and this configuration may include information associated with the beam. The information associated with the beam may mean whether a corresponding configuration (e.g., the CSI-RS resource) uses the same spatial domain filter as another configuration (e.g., another CSI-RS resource within the same CSI-RS resource set) or a different spatial domain filter, or whether it is quasi-co-located (QCL) with a certain reference signal and, if it is QCL, what type (e.g., QCL type A, B, C, or D) it is.

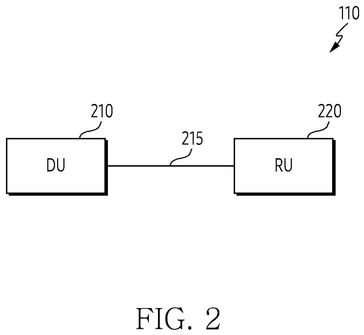

FIG. 2 illustrates an example of a base station. In FIG. 2, DU and RU in which functions of the base station are divided and implemented by different entities are described. A fronthaul interface may be used for communication between DU and RU. The fronthaul refers to between entities between a wireless RAN and a base station, unlike a backhaul between a base station and a core network. In FIG. 2, it illustrates an example of a fronthaul structure between a DU 210 and one RU 220, but this is only for convenience of explanation and the present disclosure is not limited thereto. In other words, an embodiment of the present invention may also be applied to a fronthaul structure between one DU and a plurality of RUs. For example, the embodiment of the present disclosure may be applied to a fronthaul structure between one DU and two RUs. In addition, the embodiment of the present disclosure may be applied to a fronthaul structure between one DU and three RUs.

Referring to FIG. 2, the base station 110 may include the DU 210 and the RU 220. A fronthaul 215 between the DU 210 and the RU 220 may be operated through an Fx interface. For an operation of the fronthaul 215, for example, an interface such as an enhanced common public radio interface (eCPRI) and a radio over Ethernet (ROE) may be used.

With development of communication technology, mobile data traffic has increased, and accordingly, a bandwidth requirement amount required by a fronthaul between a digital unit and a wireless unit have increased significantly. In a disposition such as a centralized/cloud radio access network (C-RAN), the DU may be implemented to perform functions with respect to a packet data convergence protocol (PDCP), a radio link control (RLC), a media access control (MAC), and physical (PHY), and the RU may be implemented to perform more functions with respect to a PHY layer in addition to a radio frequency (RF) function.

The DU 210 may handle an upper layer function of a wireless network. For example, the DU 210 may perform a function of a MAC layer and a portion of the PHY layer. Herein, the portion of the PHY layer, which is performed at a higher level among functions of the PHY layer, may include, for example, channel encoding (or channel decoding), scrambling (or descrambling), modulation (or demodulation), layer mapping (or layer demapping). According to an embodiment, in a case that the DU 210 follows an O-RAN standard, it may be referred to as an O-RAN DU (O-DU). The DU 210 may be represented by being replaced with a first network entity for a base station (e.g., gNB) in embodiments of the present disclosure as needed.

The RU 220 may handle a lower layer function of the wireless network. For example, the RU 220 may perform a portion of the PHY layer and an RF function. Herein, the portion of the PHY layer, which is performed at a relatively lower level than the DU 210 among the functions of the PHY layer, may include, for example, iFFT conversion (or FFT conversion), CP insertion (CP removal), and digital beamforming. The RU 220 may be referred to as an 'access unit (AU)', an 'access point (AP)', a 'transmission/reception point (TRP)', a 'remote radio head (RRH)', a 'radio unit (RU)', or another term having a technical meaning equivalent thereto. According to an embodiment, in a case that the RU 220 follows the O-RAN standard, it may be referred to as an O-RAN RU (O-RU). The RU 220 may be represented by being replaced with a second network entity for the base station (e.g., the gNB) in the embodiments of the present disclosure as needed.

In FIG. 2, it is illustrated that the base station 110 includes the DU 210 and the RU 220, but the embodiments of the present disclosure are not limited thereto. The base station according to the embodiments may be implemented as a distributed deployment according to a centralized unit (CU) configured to perform functions of upper layers (e.g., a packet data convergence protocol (PDCP), or a radio resource control (RRC)) of an access network, and a distributed unit (DU) configured to perform functions of lower layers. As an example, the distributed unit (DU) may include the digital unit (DU) and the radio unit (RU) of FIG. 2. As another example, the DU may be referred to as a node implemented to perform protocols of CU and DU according to a function split. In addition, as an example, between a core (e.g., a 5G core or a next generation core (NGC)) network and a wireless network (RAN), the base station may be implemented in a structure disposed in an order of the CU, the DU, and the RU. An interface between the CU and the distributed unit (DU) may be referred to as an F1 interface.

The centralized unit (CU) may handle a function of a higher layer than the DU by being connected to one or more DUs. For example, the CU may handle a function of a radio resource control (RRC) and packet data convergence protocol (PDCP) layer, and the DU and the RU may handle a function of a lower layer. The DU may perform radio link control (RLC), media access control (MAC), and some functions (high PHY) of the physical (PHY) layer, and the RU may handle remaining functions (low PHY) of the PHY layer. In addition, as an example, the digital unit (DU) may be included in the distributed unit (DU) according to the distributed deployment implementation of the base station. Hereinafter, it is described as operations of the digital unit (DU) and the RU unless otherwise defined, but various embodiments of the present disclosure may be applied to both a base station deployment including the CU, or a deployment in which the DU is directly connected to a core network (i.e., implemented by being integrated as a base station (e.g., a NG-RAN node) in which the CU and the DU are one entity).

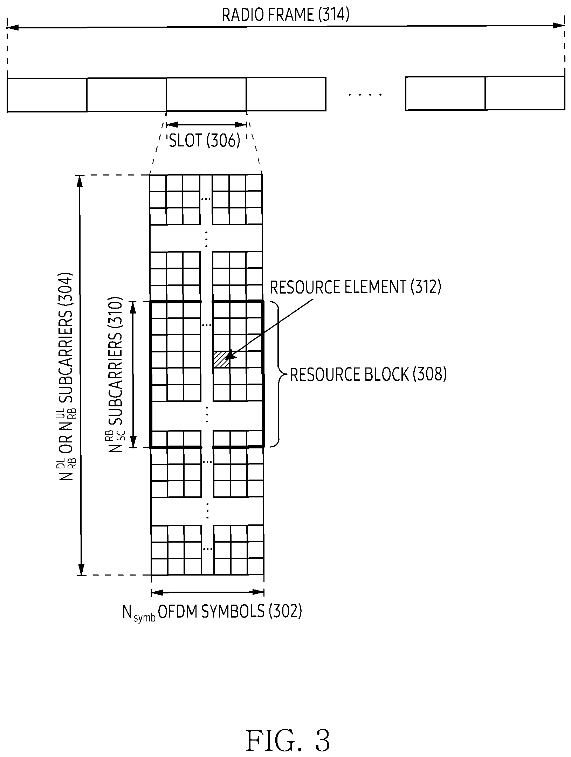

FIG. 3 illustrates an example of a resource structure in a time region and a frequency region. FIG. 3 illustrates a basic structure of a time-frequency region, which is a radio resource region in which data or a control channel is transmitted in downlink or uplink.

Referring to FIG. 3, a horizontal axis indicates the time region and a vertical axis indicates the frequency region. A minimum transmission unit in the time region is an orthogonal frequency division multiplexing (OFDM) symbol, and $N_{symb}$ OFDM symbols 302 constitute one slot 306. A length of a subframe is defined as 1.0 ms, and a length of a radio frame 314 is defined as 10 ms. A minimum transmission unit in the frequency region is a subcarrier, and a carrier bandwidth constituting a resource grid is composed of $N_{RB}^{DL}$ (in a case of downlink) or $N_{RB}^{UL}$ (in a case of uplink) subcarriers 304.

A basic unit of a resource in the time-frequency region is a resource element (hereinafter, 'RE') 312, which may be indicated by an OFDM symbol index and a subcarrier index. A resource block may include a plurality of resource elements. In an LTE system, a resource block (RB) (or a physical resource block, hereinafter, 'PRB') is defined as $N_{symb}$ consecutive OFDM symbols in the time region and $N_{SC}^{RB}$ consecutive subcarriers in the frequency region. In an NR system, a resource block (RB) 308 may be defined as $N_{SC}^{RB}$ consecutive subcarriers 310 in the frequency region. One RB 308 includes $N_{SC}^{RB}$ REs 312 in the frequency axis. In general, a minimum unit of transmission of data is an RB and the number of subcarriers, $N_{SC}^{RB}$, is 12. The frequency region may include common resource blocks (CRBs). A physical resource block (PRB) may be defined in a bandwidth part (BWP) on the frequency region. CRB and PRB numbers may be determined according to subcarrier spacing. A data rate may increase in proportion to the number of RBs scheduled for a terminal.

In an NR system, in a case of a frequency division duplex (FDD) system that operates by separating downlink and uplink by frequency, downlink transmission bandwidth and uplink transmission bandwidth may be different from each other. Channel bandwidth indicates radio frequency (RF) bandwidth corresponding to system transmission bandwidth. Table 1 illustrates a portion of a correspondence among system transmission bandwidth, subcarrier spacing (SCS), and channel bandwidth defined in an NR system in a frequency range lower than x GHz (e.g., a frequency range (FR) 1 (310 MHz to 7125 MHz)). And Table 2 illustrates a portion of a correspondence among transmission bandwidth, subcarrier spacing (SCS), and channel bandwidth defined in the NR system in a frequency range higher than y GHz (e.g., an FR2 (24250 MHz - 52600 MHz) or an FR2-2 (52600 MHz to 71000 MHz)). For example, in an NR system having 100 MHz channel bandwidth at 30 kHz subcarrier spacing, transmission bandwidth is composed of 273 RBs. In Table 1 and Table 2, N/A may be a bandwidth-subcarrier combination not supported in an NR system.

[Table 1]

| Channel bandwidth [MHz] | SCS | 5 | 10 | 20 | 50 | 80 | 100 |
|---|---|---|---|---|---|---|---|
| Transmission bandwidth configuration $N_{RB}$ | 15kHz | 25 | 52 | 106 | 207 | N/A | N/A |
| | 30kHz | 11 | 24 | 51 | 133 | 217 | 273 |
| | 60kHz | N/A | 11 | 24 | 65 | 107 | 135 |

[Table 2]

| Channel bandwidth [MHz] | SCS | 50 | 100 | 200 | 400 |
|---|---|---|---|---|---|
| Transmission bandwidth configuration $N_{RB}$ | 60kHz | 66 | 132 | 264 | N/A |
| | 120kHz | 32 | 66 | 132 | 264 |

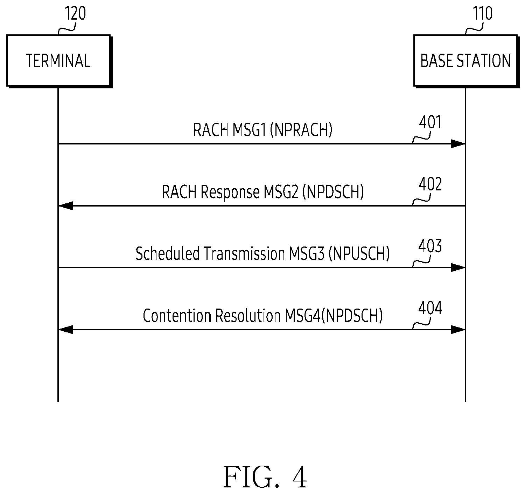

FIG. 4 illustrates an example of a random access procedure. The random access procedure may include signaling between a base station (e.g., a base station 110) and a terminal (e.g., a terminal 120). Operations of the base station 110 are described in FIG. 4, but such description does not exclude at least some of the operations of the base station 110 from being performed by a DU 210 and at least some others from being performed by an RU 220. That is, according to an implementation method of the base station 110, for example, all operations described below may be performed by a single network entity, or for another example, the operations described below may be divided and performed by a plurality of network entities (e.g., the DU 210 and the RU 220). The terminal 120 may use NB-IoT technology, which is a technology for transmitting a signal on a narrowband (e.g., 180 kHz). Meanwhile, NB-IoT may be referred to as cellular IoT (cIoT) or a term having an equivalent technical meaning.

Referring to FIG. 4, in operation 401, the terminal 120 may transmit a random access signal to the base station 110. The random access signal may be transmitted on a narrowband physical random access channel (NPRACH). The terminal 120 may receive system information related to the NPRACH from the base station. The terminal 120 may transmit a random access preamble to the base station 110 based on the system information. The random access signal may be referred to as a message 1 (MSG 1), a PRACH, an NPRACH, a preamble, a random access channel (RACH) preamble, a RACH signal, a random access preamble, or a term having an equivalent technical meaning. According to a setup of the base station 110, the terminal 120 may repeatedly transmit the random access signal. The number of repetitions of the random access signal may be configured based on an RRC configuration of the base station 110 or the system information.

In operation 402, the base station 110 may transmit a random access response (RAR) to the terminal 120. The random access response may be transmitted on a narrowband physical downlink shared channel (NPDSCH). A message including the random access response may include a message 2 (MSG 2). The base station 110, in response to the random access preamble received from the terminal 120, may transmit the message to the terminal 120. Downlink scheduling information for the message may be CRC-masked with a random access-radio network temporary identifier (random access-RNTI, RA-RNTI) and transmitted on an L1/L2 control channel (e.g., a narrowband physical control channel (NPDCCH)). The terminal 120 receiving a downlink scheduling signal masked with the RA-RNTI may obtain and decode the random access response on the NPDSCH. For example, the random access response may include scheduling information for an uplink message described below. In addition, for example, the random access response may include information on repetitions of the uplink message.

In operation 403, the terminal 120 may transmit an uplink message to the base station 110. The uplink message may be transmitted on a narrowband physical uplink shared channel (NPUSCH). The uplink message may correspond to a scheduled transmission. The terminal 120 may transmit the uplink message to the base station 110 based on radio resource allocation information included in the random access response. The uplink message may be referred to as a message 3 (MSG 3). The terminal 120 may repeat the transmission of the uplink message as many times as the number of times obtained based on the random access response.

In operation 404, the base station 110 may transmit a contention resolution message to the terminal 120. The contention resolution message may be transmitted on the NPDSCH. The contention resolution message may be referred to as a message 4 (MSG 4). For example, the contention resolution message may include an RRC connection setup message. Although not illustrated in FIG. 4, the terminal 120 may transmit a connection setup completion message to the base station after receiving the contention resolution message from the base station 110.

Although FIG. 4 describes a contention-based random access procedure, embodiments of the present disclosure are not limited thereto. Operations related to reception of the random access signal of the NB-IoT terminal of the present disclosure may also be applied to a non-contention-based random access procedure. In the non-contention-based random access procedure, the base station 110 and the terminal 120 may not perform the operations 403 and 404.

As described with reference to FIG. 4, the base station 110 and the terminal 120 may perform Internet of Things using a narrowband (i.e., NB-IoT). For example, the narrowband may be 180 kHz. The terminal 120 using NB-IoT technology may be referred to as an NB-IoT UE. The NB IoT UE may perform communication in an area with a poor channel environment, such as under a bridge, underwater, or at sea. To compensate for a poor channel environment, a technique such as repetition and power boosting for a specific channel may be used. For example, a technique using power boosting may include a technique of concentrating power per unit time on a specific resource by further reducing a frequency resource area to be transmitted within a specific band. As an example, the technique may include, when transmitting a specific signal through a resource block (RB) consisting of 12 resource elements (REs), a method of allocating power, which would otherwise be distributed through the entire RB, only to a specific RE, instead of allocating REs in units of RBs. As such, a method of performing communication by concentrating data and power in one RE within an RB may be referred to as a single-tone transmission method.

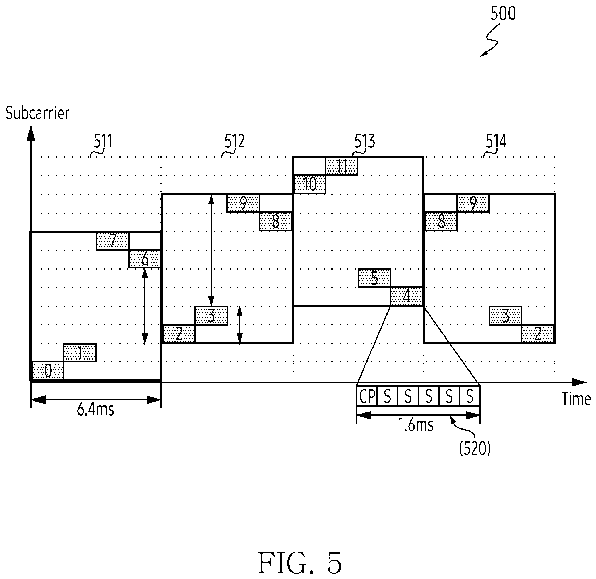

FIG. 5 illustrates an example of a narrowband physical random access channel (NPRACH) transmission. An NPRACH refers to a physical channel through which a random access signal of an NB-IoT UE is transmitted.

Referring to FIG. 5, a resource grid 500 indicates time and frequency resources through which the random access signal is transmitted. The horizontal axis of the resource grid 500 indicates time and the vertical axis indicates frequency. The random access signal may be transmitted in a narrowband. For example, the narrowband may be 180 kHz. One RE may correspond to 15 kHz, and 12 REs may be one RB, which may be the narrowband.

The NB-IoT UE (e.g., a terminal 120) may transmit the random access signal. For example, the NB-IoT UE may transmit the random access signal based on the number of repetitions. The number of repetitions may be indicated by configuration information received through RRC signaling of a base station (e.g., a base station 110). The NB-IoT UE may repeat the transmission of the random access signal as many times as the number of repetitions. For example, in a case that the number of repetitions is 1, the NB-IoT UE may transmit the random access signal. For another example, in a case that the number of repetitions is 4, the NB-IoT UE may transmit the random access signal four times. For still another example, when the number of repetitions is 16, the NB-IoT UE may transmit the random access signal sixteen times.

The random access signal, which serves as a reference for the repetition, may include four symbol groups. One symbol group 520 among the four symbol groups may include one cyclic prefix (CP) and five symbols. The four symbol groups may be disposed without time gaps between the symbol groups. Each symbol group of the four symbol groups may have an independent tone. For example, each symbol group of the four symbol groups may correspond to a specific subcarrier distinct from a subcarrier of another symbol group. The four symbol groups may include, in one cycle, a first symbol group, a second symbol group, a third symbol group, and a fourth symbol group, sequentially. A length of the CP may vary according to a preamble format. For example, the length ($T_{CP}$) of the CP and a total length ($T_{SEQ}$) of the five symbols may be configured as shown in the table below. Herein, a basic time unit is $T_s = 1/(15000 \times 2048)$.

[Table 3]

| Preamble format | $T_{CP}$ | $T_{SEQ}$ |
|---|---|---|
| 0 | $2048T_s$ | $5 \cdot 8192T_s$ |
| 1 | $8192T_s$ | $5 \cdot 8192T_s$ |

For example, assume a case in which the number of repetitions is 4. The NB-IoT UE may transmit the random access signal during a first time interval 511 (e.g., 6.4 milliseconds (ms)). Within the first time interval 511, the NB-IoT UE may transmit a preamble of the first symbol group on subcarrier #0. Within the first time interval 511, the NB-IoT UE may transmit a preamble of the second symbol group on subcarrier #1. Within the first time interval 511, the NB-IoT UE may transmit a preamble of the third symbol group on subcarrier #7. Within the first time interval 511, the NB-IoT UE may transmit a preamble of the fourth symbol group on subcarrier #6. The NB-IoT UE may transmit preambles corresponding to the random access signal within the narrowband (e.g., 180 kHz) and the first time interval 511 corresponding to a first cycle, through frequency hopping.

The NB-IoT UE may transmit the random access signal during a second time interval 512. The random access signal of the second time interval 512 is the same as the random access signal of the first time interval 511, but a frequency position may be changed. Within the second time interval 512, the NB-IoT UE may transmit the preamble of the first symbol group on subcarrier #2. Within the second time interval 512, the NB-IoT UE may transmit the preamble of the second symbol group on subcarrier #3. Within the second time interval 512, the NB-IoT UE may transmit the preamble of the third symbol group on subcarrier #9. Within the second time interval 512, the NB-IoT UE may transmit the preamble of the fourth symbol group on subcarrier #8. The NB-IoT UE may transmit the preambles corresponding to the random access signal within the narrowband (e.g., 180 kHz) and the second time interval 512 corresponding to a second cycle, through frequency hopping.

The NB-IoT UE may transmit the random access signal during a third time interval 513. Within the third time interval 513, the NB-IoT UE may transmit the preamble of the first symbol group on subcarrier #10. Within the third time interval 513, the NB-IoT UE may transmit the preamble of the second symbol group on subcarrier #11. Within the third time interval 513, the NB-IoT UE may transmit the preamble of the third symbol group on subcarrier #5. Within the third time interval 513, the NB-IoT UE may transmit the preamble of the fourth symbol group on subcarrier #4. The NB-IoT UE may transmit the preambles corresponding to the random access signal within the narrowband (e.g., 180 kHz) and the third time interval 513 corresponding to a third cycle, through frequency hopping.

The NB-IoT UE may transmit the random access signal during a fourth time interval 514. Within the fourth time interval 514, the NB-IoT UE may transmit the preamble of the first symbol group on the subcarrier #8. Within the fourth time interval 514, the NB-IoT UE may transmit the preamble of the second symbol group on the subcarrier #9. Within the fourth time interval 514, the NB-IoT UE may transmit the preamble of the third symbol group on the subcarrier #3. Within the fourth time interval 514, the NB-IoT UE may transmit the preamble of the fourth symbol group on the subcarrier #2. The NB-IoT UE may transmit the preambles corresponding to the random access signal within the narrowband (e.g., 180 kHz) and the fourth time interval 514 corresponding to a fourth cycle, through frequency hopping.

As described with reference to FIG. 5, the NB-IoT UE may transmit a random access preamble in a single-tone transmission method within the same symbol group in one transmission. Meanwhile, since a symbol group is designed with small subcarrier spacing and a long CP, detection performance of the random access signal is more sensitive to a frequency offset than to a time offset. In the single-tone transmission method, when a residual frequency offset with respect to the subcarrier spacing (SCS) is large, power of a received NPRACH preamble may leak to an adjacent subcarrier, increasing interference with another preamble. The increased interference causes deterioration of the detection performance on the receiver side. Therefore, to compensate for the frequency offset described above, the base station (e.g., the base station 110) or a device (e.g., a DU 210) of the base station may estimate the frequency offset.

A method to obtain good reception performance in an NB-IoT system is to detect the random access signal by estimating uplink timing and the frequency offset together, i.e., through joint estimation. However, estimating the uplink timing and the frequency offset together may provide optimal performance in detecting the random access signal, but there also is a problem of excessively high implementation complexity. Specifically, it is as follows.

The random access signal may include a plurality of OFDM symbols. For example, the random access signal may include $L \times M$ symbols. The random access signal may include M symbol groups, and each symbol group may include L symbols. As an example, a received signal at the l-th symbol of the m-th symbol group among the M symbol groups may be represented as follows.

【Equation 1】

$$Y_{m,l}\big(\Omega(m)\big) = h(m, l) \cdot e^{i\pi\Delta f(N-1-2D)/N} \frac{\sin(\pi\Delta f)}{N\sin(\pi\Delta f/N)} \times e^{i2\pi\Delta f(m(N_{cp}+LN)+lN)/N}$$

$$\cdot\, e^{-i2\pi D\Omega(m)/N}$$

$m = 0, \dots, M - 1; l = 0, \dots, L - 1$

Herein, $\Omega(m)$ indicates a subcarrier corresponding to the m-th symbol group, and $Y_{m,l}(.)$ indicates the received signal at the l-th symbol of the m-th symbol group. $h(m, l)$ indicates a channel coefficient at the l-th symbol of the m-th symbol group, $N_{cp}$ indicates the number of samples of the CP, $N$ indicates the number of samples of the symbol, D indicates the time offset (i.e., timing advance (TA) for the uplink timing), and $\Delta f$ indicates the frequency offset.

In the equation, assuming that the channel coefficient $h(m, l)$ is equal to period of the random access signal of the NPRACH, it may be identified that a phase change of the random access signal is determined by the time offset D and the frequency offset $\Delta f$.

The base station (e.g., the base station 110) or the DU (e.g., the DU 210) of the base station may generate a local sequence having a phase change corresponding to the time offset D and the frequency offset $\Delta f$. The base station or the DU 210 may identify a correlation between the local sequence, and the symbol group m along with the symbol index l within the symbol group, based on the local sequence. When the signal exists at a position according to an actual time offset and frequency offset, the base station 110 may obtain peak energy according to the correlation. For example, the peak energy may be obtained based on the following equation.

【Equation 2】

$$J(D, \Delta f) = \sum_{g=0}^{L/Q-1} \left| J_g(D, \Delta f) \right|^2$$

Based on Equations 1 and 2, a correlation between the time offset and the frequency offset may be configured based on the following equation. Through joint estimation for the given time offset and the frequency offset, a time offset and a frequency offset that maximize a correlation value (i.e., that have the greatest peak energy) may be estimated.

【Equation 3】

$$J_g(D, \Delta f) = \sum_{m=gQ}^{(g+1)Q-1} \sum_{l=0}^{L-1} Y_{m,l}(\Omega(m)) \times e^{-i2\pi\Delta f(m(N_{cp}+LN)+lN)/N} \cdot e^{i2\pi D\Omega(m)/N}$$

Based on Equation 3, a two-dimensional FFT may be used to estimate the time offset and the frequency offset that provide the maximum correlation. For example, a right-hand side of Equation 3 may be transformed into the following equation.

【Equation 4】

$$\sum_{m=gQ}^{(g+1)Q-1} \left( \left( \sum_{l=0}^{L-1} Y_{m,l}(\Omega(m)) \cdot e^{-i2\pi\Delta f l} \right) e^{-i2\pi\Delta f m \frac{N_{cp}+LN}{N}} \right)$$

Based on $J_g(D, \Delta f)$ derived from Equation 4, an estimation result of a time offset in D $\in$ [0, $N_{CP}$] range and an estimation result of a frequency offset in $\Delta f \in$ (-0.5, +0.5) range (e.g., a normalized frequency offset) may be obtained.

A random access signal of 3GPP NB-IoT uses a single-tone, and a multi-level frequency hopping method, in which the tone is changed at regular intervals, is used. As described above, estimating the uplink timing and the frequency offset together has a problem of high implementation complexity in detecting the random access signal. To solve the above-described problem, embodiments of the present disclosure describe a technique for identifying the frequency offset through a correlation combination between symbols, within a symbol group corresponding to a certain period.

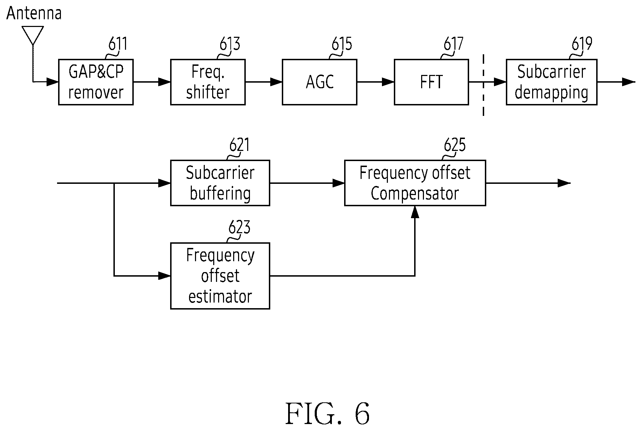

FIG. 6 illustrates an example of frequency offset compensation. In FIG. 6, functional blocks for processing a signal received through an antenna are described. Each functional block may be understood as an operation at a network entity (e.g., a base station 110, a DU 210, or an RU 220).

Referring to FIG. 6, in operation 611, the base station 110 may perform gap and CP removal. A gap and CP may be removed from a random access signal received from each antenna according to the 3GPP NB-IoT standard.

In operation 613, the base station 110 may perform frequency shifting. The base station 110 may perform frequency shifting on the signal from which the gap and the CP have been removed.

In operation 615, the base station 110 may perform automatic gain control (AGC). The base station may determine gain and phase to be applied to the signal through the AGC with respect to the signal obtained through the operation 613.

In operation 617, the base station 110 may perform FFT. The base station 110 may perform the FFT on the signal to change the signal obtained through the operation 615 from time domain to frequency domain.

In operation 619, the base station 110 may perform subcarrier demapping. For example, the base station 110 may demap an output signal of the operation 617 to subcarriers (e.g., 48=12×4 subcarriers) used in the random access signal.

In operation 621, the base station 110 may perform subcarrier buffering. The demapped signal may be buffered until a result of frequency offset estimation is derived.

In operation 623, the base station 110 may estimate a frequency offset. The base station 110 may estimate the frequency offset based on an inter-symbol correlation calculation. The estimated frequency offset may be used to compensate for a frequency difference existing in the random access signal. For example, a function block (i.e., a frequency offset estimator) corresponding to the operation 623 may include a total noise estimator, a frequency correlator, and a frequency offset decision block.

In operation 625, the base station 110 may perform frequency offset compensation. The base station 110 may perform the frequency offset compensation by applying the estimated frequency offset result to the demapped signal.

Although the operations 601 to 625 in FIG. 6 are described as operations of the base station 110, embodiments of the present disclosure are not limited thereto. The operations described in FIG. 6 may be divided to a plurality of network entities (e.g., the DU 210 and the RU 220), and each network entity may be configured to perform the corresponding operation. In other words, in order to reduce the transmission capacity of a wired network and to decrease the installation cost of the wired network, a 'function split' may be used, in which some functions of a modem of a DU are offloaded to an RU to reduce the transmission capacity of the fronthaul. To reduce the load on the DU, a role of the RU, which conventionally only handles RF functions, may be extended to some functions of a physical layer. As the RU performs functions of a higher layer, the throughput of the RU increases, which increases transmission bandwidth in the fronthaul, and at the same time, latency requirement constraints due to response processing may decrease. Meanwhile, as the RU performs functions of a higher layer, virtualization gain decreases, and a size, weight, and cost of the RU increase. Considering trade-off between the above-described advantages and disadvantages, it is required to implement an optimal function split.

In a case of downlink (DL) transmitting a signal to a terminal 120 through a wireless network, network entities may sequentially perform channel encoding/scrambling, modulation, layer mapping, antenna mapping, RE mapping, digital beamforming (e.g., precoding), iFFT conversion/CP insertion, and RF conversion. In a case of uplink (UL) receiving a signal from the terminal 120 through the wireless network, the network entities may sequentially perform RF conversion, FFT conversion/CP removal, digital beamforming (pre-combining), RE demapping, channel estimation, layer demapping, demodulation, and decoding/descrambling. The separation of uplink functions and downlink functions may be defined in various types by the needs and discussions in standards, among vendors, and the like, according to the trade-offs described above. According to an embodiment, in a specific function split (e.g., Option 7-2x), the RU 220 may perform iFFT conversion/CP insertion in the DL of a PHY function and FFT conversion/CP removal in the UL, and the DU 210 may perform the remaining PHY functions. For example, the operations 601 to 617 described above may be performed in the RU 220, and the operations 619 to 625 may be performed in the DU 210. According to another embodiment, in a specific function split (e.g., Option 7-2), the RU 220 may perform RE mapping (or RE demapping) in both the DL and the UL, and the DU 210 may perform higher PHY functions after the RE mapping (or RE demapping). For example, the operations 601 to 621 described above may be performed in the RU 220, and the operations 623 to 625 may be performed in the DU 210. According to still another embodiment, in a specific function split (e.g., Option 6), the RU 220 may perform encoding/-scrambling (or decoding/descrambling) in both the DL and the UL, and the DU 210 may perform higher PHY functions after modulation (or demodulation). For example, the operations 601 to 625 described above may be performed in the RU 220.

A signal received at the k-th symbol of the *l*-th group for each receive antenna may be represented as shown in the following equation.

【Equation 5】

$$x_{l,k} = g_l e^{j\theta k} + n_{l,k}$$

$x_{l,k}$ means a signal received at the k-th symbol of the *l*-th symbol group. K is 5 in k = 0~K - 1. θ indicates a phase change amount that changes by the frequency offset ($f_0$) during a symbol interval ($T_u = 8192 \cdot T_s$). For example, the amount of phase change may be represented as shown in the following equation.

【Equation 6】

$$\theta = 2\pi f_0 T_u$$

When an unknown constant phase component and a frequency offset exist within a slot, a power density function (PDF) may be represented as shown in the following equation.

【Equation 7】

$$p(x_l; g_l, \theta) = \frac{1}{(2\pi\sigma_l^2)^K} \exp\left(\frac{-(x_l - \theta g_l)^H (x_l - \theta g_l)}{\sigma_l^2}\right)$$

$p(x_l; g_l, \theta)$ indicates a PDF of a received signal $(x_l)$ of the l-th group, an arbitrary parameter $(g_l)$ for the l-th group, and a phase change amount $\theta$. $\alpha_l^2$ indicates the variance of the l-th group. For example, the phase change amount and the received signal may be represented as shown in the following equation.

【Equation 8】

$$\theta = \begin{bmatrix} 1 \\ e^{j\theta 1} \\ e^{j\theta 2} \\ e^{j\theta 3} \\ \cdot \\ \cdot \\ \cdot \\ e^{j\theta(K-1)} \end{bmatrix}, \quad x_l = \begin{bmatrix} x_{l,0} \\ x_{l,1} \\ x_{l,2} \\ x_{l,3} \\ \cdot \\ \cdot \\ \cdot \\ x_{l,K-1} \end{bmatrix}$$

$p(x_l; g_l, \theta)$ indicates a PDF of a received signal $(x_l)$ of the l-th group, an arbitrary parameter $(g_l)$ for the l-th group, and a phase change amount $\theta$. $\alpha_l^2$ indicates the variance of the l-th group. For example, the phase change amount and the received signal may be represented as shown in the following equation.

Since the arbitrary parameter $(g_l)$ is an undetermined parameter, it may be determined as an estimated value that can obtain a high PDF (e.g., maximize the PDF).

【Equation 9】

$$\hat{g}_l = \max_{g_l} p(\mathbf{x}_l; g_l, \theta)$$

Since the arbitrary parameter $(g_l)$ is an undetermined parameter, it may be determined as an estimated value that can obtain a high PDF (e.g., maximize the PDF). Taking the logarithm of Equation 7, the following expansion may be derived.

【Equation 10】

$$f_l(\theta) = \ln p(\mathbf{x}_l; g_l, \theta) = \ln\frac{1}{(2\pi\sigma_l^2)^K} - \frac{\mathbf{x}_l^H \mathbf{x}_l}{\sigma_l^2} + 2\,\text{Re}[\frac{\mathbf{x}_l^H \theta g_l}{\sigma_l^2}] - \frac{g_l^H \theta^H \theta g_l}{\sigma_l^2}$$

$$= \ln\frac{1}{(2\pi\sigma_l^2)^K} - \frac{\mathbf{x}_l^H \mathbf{x}_l}{\sigma_l^2} + 2\,\text{Re}[\frac{\mathbf{x}_l^H \theta g_l}{\sigma_l^2}] - K\frac{\mathbf{g}_l^H \mathbf{g}_l}{\sigma_l^2}$$

To find an arbitrary parameter $(g_l)$ that maximizes Equation 10, differentiation may be performed on both sides. For example, a result of the differentiation may be represented as shown in the following equation.

【Equation 11】

$$\frac{\partial \ln p\ (X_1; g_l, \theta)}{\partial g_l} = \frac{\theta^H X_1}{\sigma_1^2} - K\frac{g_l}{\sigma_1^2} = 0 \Rightarrow g_l = \frac{\theta^H X_l}{k}$$

By substituting the arbitrary parameter ($g_l$) of Equation 11 into Equation 10, Equation 10 may be simplified as follows.

【Equation 12】

$$f_l(\theta) = \ln p(\mathbf{x}_l; \hat{g}_l, \theta) = \ln\frac{1}{(2\pi\sigma_l^2)^K} - \frac{\mathbf{x}_l^H \mathbf{x}_l}{\sigma_l^2} + 2\operatorname{Re}[\frac{\mathbf{x}_l^H \theta\theta^H \mathbf{x}_l}{\sigma_l^2 K}] - K\frac{\mathbf{x}_l^H \theta\theta^H \mathbf{x}_l}{\sigma_l^2}$$

$$= \ln\frac{1}{(2\pi\sigma_l^2)^K} - \frac{\mathbf{x}_l^H \mathbf{x}_l}{\sigma_l^2} + 2\frac{\left|\theta^H \mathbf{x}_l\right|^2}{\sigma_l^2 K} - \frac{\left|\theta^H \mathbf{x}_l\right|^2}{\sigma_l^2 K}$$

$$= \ln\frac{1}{(2\pi\sigma_l^2)^K} - \frac{\mathbf{x}_l^H \mathbf{x}_l}{\sigma_l^2} + \frac{\left|\theta^H \mathbf{x}_l\right|^2}{\sigma_l^2 K}$$

$$= \ln\alpha_l + \frac{1}{K}\frac{\left|\sum_{k=0}^{K-1} x_{l,k} e^{-j\theta k}\right|^2}{\sigma_l^2}$$

By substituting the arbitrary parameter ($g_l$) of Equation 11 into Equation 10, Equation 10 may be simplified as follows.
Since Equation 10 is an arbitrary parameter ($g_l$) for the l-th group, a log likelihood for a total of L groups may be represented as shown in the following equation.

【Equation 13】

$$f(\theta) = \sum_{l=0}^{L-1} f_l(\theta) = \sum_{l=0}^{L-1}\ln\alpha_l + \frac{1}{K}\sum_{l=0}^{L-1}\frac{\left|\sum_{k=0}^{K-1} x_{l,k} e^{-j\theta k}\right|^2}{\sigma_l^2}$$

$$\cong \beta + \frac{1}{K}\sum_{l=0}^{L-1}\frac{\left|\sum_{k=0}^{K-1} x_{l,k} e^{-j\theta k}\right|^2}{\sigma_l^2} \Rightarrow p(\theta) = \sum_{l=0}^{L-1}\frac{\left|\sum_{k=0}^{K-1} x_{l,k} e^{-j\theta k}\right|^2}{\sigma_l^2}$$

To find the phase change amount having the maximum value, the following equation may be used.

【Equation 14】

$$\hat{\theta} = \max_{\theta} p(\theta)$$

The phase change amount value estimated through Equation 14 may be used to derive the frequency offset. For example, the frequency offset may be represented as the following equation based on Equation 6.

【Equation 15】

$$f_{est} = \frac{\hat{\theta}}{2\pi T_u}, T_u = 1/3750$$

$f_{est}$ indicates the estimated frequency offset.

Equation 13 may be expressed in the form of a correlation calculation as shown in the following equation.

【Equation 16】

$$p(\theta) = \sum_{l=0}^{L-1} \frac{\left|\sum_{k=0}^{K-1} x_{l,k} e^{-j\theta k}\right|^2}{\sigma_l^2} = \sum_{l=0}^{L-1} \sum_{k=0}^{K-1} \sum_{m=0}^{K-1} \frac{x_{l,k} x_{l,m}^* e^{-j\theta(k-m)}}{\sigma_l^2}$$

In Equation 16, if the correlation calculation of identical symbols within a symbol group is grouped and organized, Equation 16 may be represented as the following equation.

【Equation 17】

$$p(\theta) = Re[\sum_{l=0}^{L-1} \sum_{k=0}^{K-1} R_l(k) e^{-j\theta k}] = Re[\sum_{k=0}^{K-1} \sum_{l=0}^{L-1} R_l(k) e^{-j\theta k}] = Re[\sum_{k=0}^{K-1} R(k) e^{-j\theta k}]$$

【Equation 18】

$$R_l(k) = \sum_{i=k+1}^{K-1} \frac{x_{l,i} x_{l,i-k}^*}{\sigma_l^2}$$

Assuming $\theta = \frac{2\pi n}{N}$ , identifying θ for providing a maximum PDF may be understood as identifying $n$ for providing the maximum PDF. Identifying θ for providing the maximum PDF may be implemented in the form of an FFT. For example, Equation 14 may be represented as the following equation.

【Equation 19】

$$n_{max} = \max_n Re[\sum_{k=0}^{N-1} R(k) e^{-j\frac{2\pi n}{N} k}] = \max_n Re[FFT(R(k))]$$

Considering that a length of one symbol is $T_u$ (= 1/3750), an estimation range of a possible frequency offset may be from -1875 Hz to 1875 Hz.

According to a designated technique (e.g., a Luise algorithm), identifying θ may be approximated by the following equation.

【Equation 20】

$$\theta = \frac{arg(\sum_{k=1}^{M} R(k)/(K-k))}{(M+1)/2}, M \leq (K-1)$$

【Equation 21】

$$R(k) = \sum_{l=0}^{L-1} R_l(k)$$

$M$ indicates the number of correlations between symbols. For example, in an inter-symbol correlation calculation, in a case that a correlation calculation in which a distance between symbols is 1 and a correlation calculation in which a distance between symbols is 2 exist, $M$ may be 2. A random access signal for NB-IoT transmitted on NPRACH may include four symbol groups, and each symbol group may include a total of five symbols. Accordingly, the number of correlations between symbols within one symbol group may be less than or equal to 4.

For example, in a case in which $M$ is 4, the estimation range of the frequency offset in Equation 20 may be represented as the following equation.

【Equation 22】

$$-\frac{1}{T_u(M+1)} \leq x < \frac{1}{T_u(M+1)} => -750Hz \leq x < 750Hz$$

Hereinafter, based on the equations described above, a technique for obtaining high performance of frequency offset estimation with simplified implementation complexity is described in the present disclosure. As described in Equation 20, a correlation calculation between symbols within a symbol group corresponding to a same subcarrier may be used to estimate the frequency offset. Hereinafter, information on a correlation calculation between symbols may be referred to as inter-symbol correlation information.

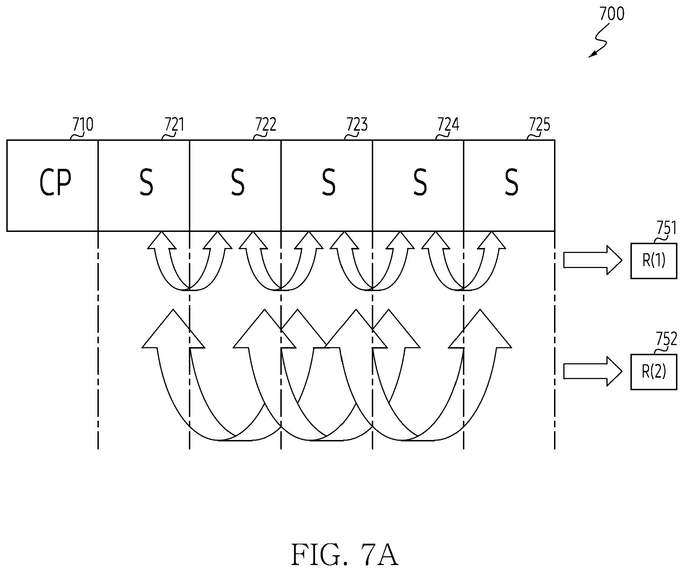

FIGS. 7A to 7B illustrate examples of inter-symbol correlation information. Inter-symbol correlation information may be obtained for each symbol group.

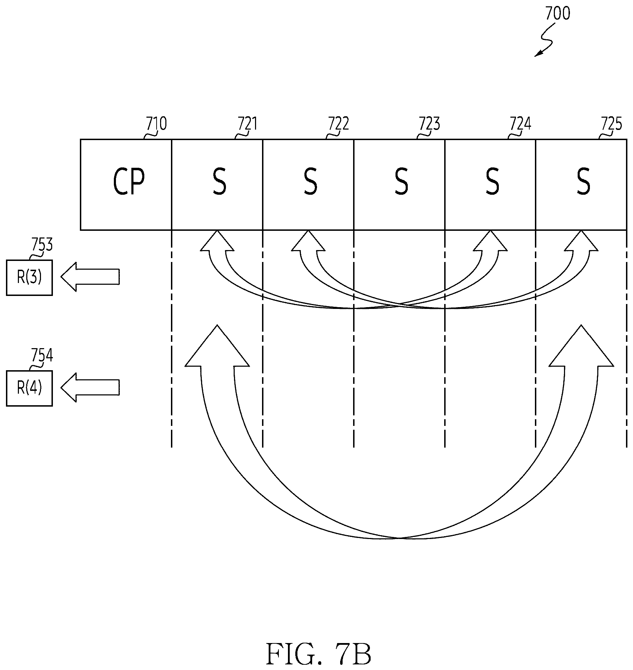

Referring to FIGS. 7A and 7B, a symbol group 700 may include a CP 710, a first symbol 721, a second symbol 722, a third symbol 723, a fourth symbol 724, and a fifth symbol 725.

First correlation information 751 may include correlation values between adjacent symbols. For example, the correlation values may include a correlation value between the first symbol 721 and the second symbol 722. The correlation values may include a correlation value between the second symbol 722 and the third symbol 723. The correlation values may include a correlation value between the third symbol 723 and the fourth symbol 724. The correlation values may include a correlation value between the fourth symbol 724 and the fifth symbol 725. The first correlation information 751 may be determined based on the correlation values. For example, the first correlation information 751 may include a sum of the correlation values.

Second correlation information 752 may include correlation values between symbols having one symbol interval. For example, the correlation values may include a correlation value between the first symbol 721 and the third symbol 723. The correlation values may include a correlation value between the second symbol 722 and the fourth symbol 724. The correlation values may include a correlation value between the third symbol 723 and the fifth symbol 725. The second correlation information 752 may be determined based on the correlation values. For example, the second correlation information 752 may include a sum of the correlation values.

Third correlation information 753 may include correlation values between symbols having a symbol interval corresponding to two symbols. For example, the correlation values may include a correlation value between the first symbol 721 and the fourth symbol 724. The correlation values may include a correlation value between the second symbol 722 and the fifth symbol 725. The third correlation information 753 may be determined based on the correlation values. For example, the third correlation information 753 may include a sum of the correlation values.

Fourth correlation information 754 may include a correlation value having a symbol interval corresponding to three symbols. For example, the correlation value may include a correlation value between the first symbol 721 and the fifth symbol 725.

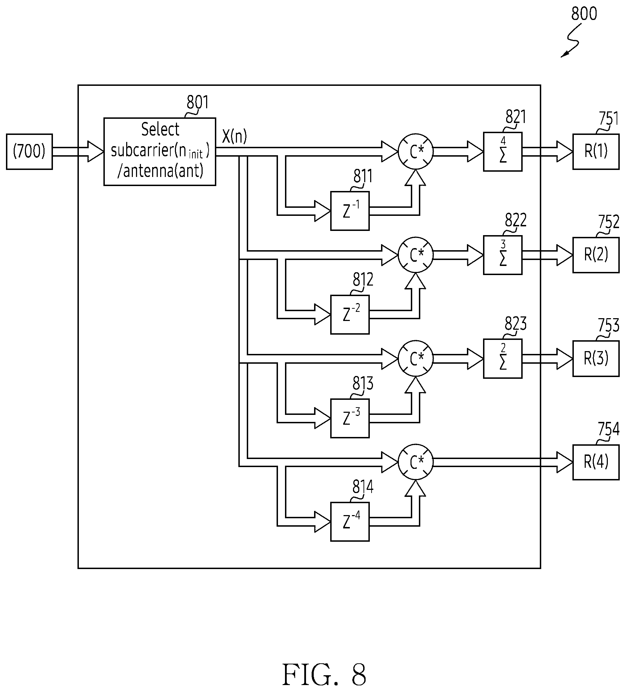

FIG. 8 illustrates an example of a calculation unit for calculating inter-symbol correlation information. The calculation unit may be used to derive the inter-symbol correlation information of FIGS. 7A and 7B.

Referring to FIG. 8, a symbol group 700 may be inputted to the calculation unit. The calculation unit may include a selection block 801. The calculation unit may be configured to select an antenna and a subcarrier corresponding to the symbol group 700. The calculation unit may obtain a signal x(n) corresponding to the selected subcarrier. The calculation unit may include a correlator. The correlator may perform correlation between symbols spaced apart by a certain symbol interval (e.g., 0 symbol, 1 symbol, 2 symbols, and 3 symbols) of a demapped signal. A correlation calculation operation of the calculation unit may include an operation of obtaining R(k). R(k) may correspond to the correlation calculation of Equations 18 to 21.

【Equation 23】

$$R(k) = x(n) * conj\big(x(n - k)\big), [n = 0{\sim}4, k = 1{\sim}4]$$

Herein, x(n) means a signal of a symbol group unit selected for each subcarrier of each antenna. k indicates a symbol distance (e.g., the symbol distance between the first symbol 721 and the third symbol 723 is 2), and n indicates a symbol position (e.g., n=0 corresponds to the first symbol 721). Different time delays may be applied for each k.

For example, the calculation unit may obtain a first delayed signal by inputting the signal to a first delay unit 811. The calculation unit may obtain correlation values through a conjugate calculation between the signal and the first delayed signal. The calculation unit may obtain first correlation information 751 by adding the correlation values through a first adder 821. For example, the first adder 821 may be configured to output the first correlation information 751 by adding a correlation value between a first symbol 721 and a second symbol 722, a correlation value between the second symbol 722 and a third symbol 723, a correlation value between the third symbol 723 and a fourth symbol 724, and a correlation value between the fourth symbol 724 and a fifth symbol 725.

For example, the calculation unit may obtain a second delayed signal by inputting the signal to a second delay unit 812. The calculation unit may obtain correlation values through a conjugate calculation between the signal and the second delayed signal. The calculation unit may obtain second correlation information 752 by adding the correlation values through a second adder 822. For example, the second adder 822 may be configured to output the second correlation information 752 by adding a correlation value between the first symbol 721 and the third symbol 723, a correlation value between the second symbol 722 and the fourth symbol 724, and a correlation value between the third symbol 723 and the fifth symbol 725.

For example, the calculation unit may obtain a third delayed signal by inputting the signal to a third delay unit 813. The calculation unit may obtain correlation values through a conjugate calculation between the signal and the third delayed signal. The calculation unit may obtain third correlation information 753 by adding the correlation values through a third adder 823. For example, the third adder 823 may be configured to output the third correlation information 753 by adding a correlation value between the first symbol 721 and the fourth symbol 724 and a correlation value between the second symbol 722 and the fifth symbol 725.

For example, the calculation unit may obtain a fourth delayed signal by inputting the signal to a fourth delay unit 814. The calculation unit may obtain a correlation value through a conjugate calculation between the signal and the fourth delayed signal. The correlation value may correspond to fourth correlation information 754.

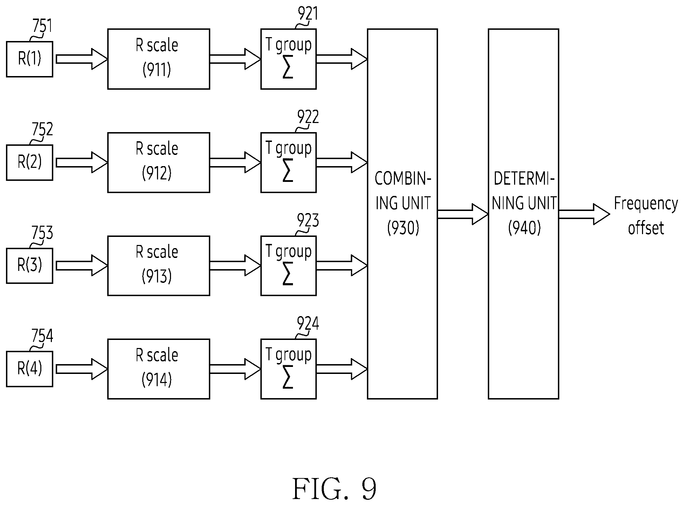

In FIG. 8, an example of outputting correlation information of a symbol group (e.g., the first correlation information 751, the second correlation information 752, the third correlation information 753, and the fourth correlation information 754) is described. A base station 110 may obtain correlation information for each symbol group. The base station 101 may determine a frequency offset based on the correlation information of each symbol group. Hereinafter, with reference to FIG. 9, operations for determining the frequency offset based on the correlation information of each symbol group are described.

FIG. 9 illustrates functional blocks for determining a frequency offset based on inter-symbol correlation information. Each functional block may be understood as an operation in a network entity (e.g., a base station 110, a DU 210, or an RU 220). A random access signal on an NPRACH may be repeatedly transmitted. One transmission may include four symbol groups. Each symbol group may be referred to as a preamble unit. A base station may output correlation information corresponding to each group, that is, each preamble unit.

Referring to FIG. 9, the base station 110 may perform scaling. The base station 110 may perform scaling on correlation information. In operation 911, the base station 110 may perform scaling on first correlation information 751. For example, the base station 110 may apply a scaling factor corresponding to $\frac{1}{K-k}$ of Equation 20 to the first correlation information 751. As an example, since K=5 and k of the first correlation information 751 is 1, the base station 110 may apply a scaling of 1/4 to the first correlation information 751. Since the first correlation information 751 includes a sum of four correlation values, a scaling value of 1/4 may be applied to derive a phase change amount for a unit length (e.g., a length corresponding to one symbol distance). Subsequently, in operation 921, the base station 110 may sum scaling results of the first correlation information 751 of each symbol group. The base station 110 may sum values of the first correlation information 751 for all symbol groups corresponding to repetitions. T indicates the total number of symbol groups of all repetitions. For example, in a case that the number of the repetitions is 8, the base station 110 may sum a total of 32 values of the first correlation information 751.

In operation 912, the base station 110 may perform scaling on second correlation information 752. For example, the base station 110 may apply a scaling factor of 1/3 to the second correlation information 752 based on Equation 20. Since the second correlation information 752 includes a sum of three correlation values, a scaling value of 1/3 may be applied to derive a phase change amount for a unit length (e.g., a length corresponding to one symbol distance). Subsequently, in operation 922, the base station 110 may sum scaling results of the second correlation information 752 of each symbol group. The base station 110 may sum values of the second correlation information 752 for all symbol groups corresponding to repetitions. T indicates the total number of symbol groups of all repetitions. For example, in a case that the number of the repetitions is 8, the base station 110 may sum a total of 32 values of the second correlation information 752.

In operation 913, the base station 110 may perform scaling on third correlation information 753. For example, the base station 110 may apply a scaling factor of 1/2 to the third correlation information 753 based on Equation 20. Since the third correlation information 753 includes a sum of two correlation values, a scaling value of 1/2 may be applied to derive a phase change amount for a unit length (e.g., a length corresponding to one symbol distance). Subsequently, in operation 923, the base station 110 may sum scaling results of the third correlation information 753 of each symbol group. The base station 110 may sum values of the third correlation information 753 for all symbol groups corresponding to repetitions. T indicates the total number of symbol groups of all repetitions. For example, in a case that the number of the repetitions is 8, the base station 110 may sum a total of 32 values of the third correlation information 753.

In operation 914, the base station 110 may perform scaling on fourth correlation information 753. For example, the base station 110 may apply a scaling factor of 1 to the fourth correlation information 754 based on Equation 20. According to another embodiment, a scaling block corresponding to the operation 914 may be omitted. Subsequently, in operation 924, the base station 110 may sum scaling results of the fourth correlation information 754 of each symbol group. The base station 110 may sum values of the fourth correlation information 754 for all symbol groups corresponding to repetitions. T indicates the total number of symbol groups of all repetitions. For example, in a case that the number of the repetitions is 8, the base station 110 may sum a total of 32 values of the fourth correlation information 754.

In operation 930, the base station 110 may combine the output of the operation 921, the output of the operation 922, the output of the operation 923, and the output of the operation 924. The base station 110 may combine a correlation value R(x) corresponding to all repetitions and all symbol groups. For example, the operation 930 may correspond to $\sum_{k=1}^{M} R(k)/(K-k)$ of Equation 20. Herein, a summing operation for the symbol groups may correspond to Equation 21. The base station 110 may store correlation values over an entire period corresponding to an NPRACH transmission. The base station 110 may add the accumulated correlation values.

In operation 940, the base station 110 may determine a frequency offset based on the combined value. The base station 110 may determine an angle based on the combined value. The base station 110 may obtain a phase change amount through scaling of the angle. The base station 110 may determine a frequency offset corresponding to the phase change amount. For example, the base station 110 may determine an angle corresponding to the phase change amount through $arg(\cdot)$ of Equation 20. The base station 110 may determine the phase change amount and the frequency offset by applying a scaling corresponding to 2/(M+1) of Equation 20. To describe a relationship between the phase change amount and the frequency offset, Equation 6 may be referred to. As an example, M may be 4 in a situation in which a random access signal of an NPRACH is received. Through the operation 940, a frequency offset may be determined for each antenna. The determined frequency offset may be used to remove a frequency offset component of a buffered random access signal (e.g., buffering of operation 621).

In FIG. 9, an operation of summing inter-symbol correlation values of all repetitions of the NPRACH transmission and all symbol groups of each repetition, and determining a frequency offset based on the summation result is described, but embodiments of the present disclosure are not limited thereto. To further simplify computational complexity, at least some of the repetitions or the symbol groups may be excluded from the summation of the correlation calculation. The accuracy performance of the frequency offset for NPRACH and the computational complexity are in a trade-off relationship. Even if the accuracy is somewhat reduced due to approximation, an efficient operation of a modem may be provided by reducing an amount of calculation.

According to an embodiment, instead of all repetitions of the NPRACH transmission, inter-symbol correlation information for at least one NPRACH transmission corresponding to a portion of the repetitions may be used to determine a frequency offset. For example, assume a situation in which NPRACH preambles are repeatedly transmitted eight times. The base station 110 may determine a frequency offset based on correlation information for each symbol group, for symbol groups of a second transmission, a fourth transmission, a sixth transmission, and an eighth transmission. For another example, assume a situation in which NPRACH preambles are repeatedly transmitted 32 times. The base station 110 may determine a frequency offset based on correlation information for each symbol group, for symbol groups of a first transmission, a ninth transmission, a 17th transmission, and a 25th transmission.

According to an embodiment, instead of all symbol groups of the NPRACH transmission, correlation information for one symbol group among four symbol groups may be used to determine a frequency offset. For example, assume a case in which NPRACH preambles are repeatedly transmitted four times. One transmission of the NPRACH preamble may include transmission corresponding to four symbol groups. Correlation information on one transmission may include inter-symbol correlation information of a first symbol group among the four symbol groups. The base station 110 may output the inter-symbol correlation information of the first symbol group in each repetition and determine a frequency offset by combining the outputted correlation information.

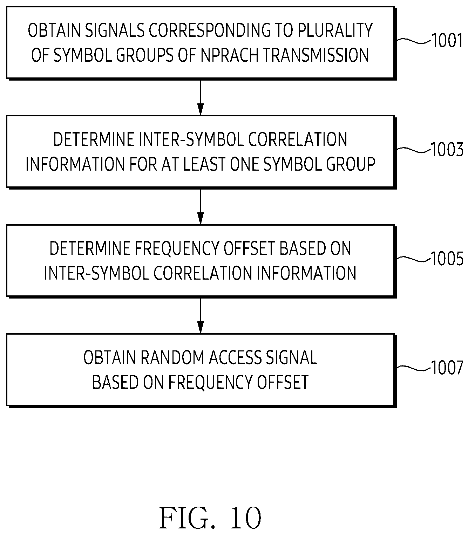

FIG. 10 illustrates an operation flow of a device (e.g., a DU 210) of a base station (e.g., a base station 110) for obtaining a random access signal.

Referring to FIG. 10, in operation 1001, the device may obtain signals corresponding to a plurality of symbol groups of an NPRACH transmission. The NPRACH transmission may be repeatedly transmitted N times. The N may be configured for an NB-IoT UE (e.g., a terminal 120) by RRC signaling of a network node. The plurality of symbol groups may include symbol groups corresponding to repetitions of N times (N is an integer greater than or equal to 1) (e.g., N is 1, 2, 4, 8, 16, 32, 64, 128, 256, 512, 1024, and 2048). One transmission may include transmission of four symbol groups. For example, in a case that the number of repetitions (N) is 32, the number of the plurality of symbol groups may be 128. For another example, in a case that the number of repetitions is 4, the number of the plurality of symbol groups may be 16. For example, the terminal 120 may transmit a plurality of random access preambles corresponding to the NPRACH transmission to an RU (e.g., an RU 220). The RU 220 may perform physical layer processing such as CP removal and FFT, and may transmit the processed signals to the DU 210 for a modem-side calculation.

In operation 1003, the device may determine inter-symbol correlation information for at least one symbol group. The device may identify at least one symbol group among a plurality of symbol groups for determining a frequency offset. According to an embodiment, the device may identify at least one repetition corresponding to a subset among all repetitions. The device may identify symbol groups (four symbol groups for each repetition) corresponding to the at least one repetition. In addition, according to an embodiment, the device may identify a subset (e.g., one symbol group or two symbol groups) among four symbol groups of each repetition. The device may identify at least one symbol group (wherein, the number of the at least one symbol group is less than or equal to 3) for each repetition. In addition, according to an embodiment, the device may identify some symbol groups (e.g., one symbol group or two symbol groups) for some repetitions (e.g., 1/2 of the number of total repetitions) among all repetitions. In addition, according to an embodiment, the device may identify all symbol groups for the total repetitions. That is, for high performance, the device may calculate a phase change amount for all possible symbol groups.

The device may determine inter-symbol correlation information for the at least one symbol group. A symbol group may include five symbols. The device may determine inter-symbol correlation information for each symbol group of the at least one symbol group. The inter-symbol correlation information may be determined through correlation values between two symbols within a symbol group. For example, the inter-symbol correlation information may include first correlation information, which is a correlation calculation between adjacent symbols (i.e., having a symbol distance of 1). The first correlation information may be a sum of correlation values between adjacent symbols. In addition, for example, the inter-symbol correlation information may include second correlation information, which is a correlation calculation between symbols having a symbol distance of 2. The second correlation information may be a sum of correlation values between symbols having a symbol distance of 2. In addition, for example, the inter-symbol correlation information may include third correlation information, which is a correlation calculation between symbols having a symbol distance of 3. The third correlation information may be a sum of correlation values between symbols having a symbol distance of 3. In addition, for example, the inter-symbol correlation information may include fourth correlation information, which is a correlation calculation between symbols having a symbol distance of 4. The fourth correlation information may be a sum of correlation values between symbols having a symbol distance of 4.

In operation 1005, the device may determine a frequency offset based on the inter-symbol correlation information. The device may combine values corresponding to the first correlation information of symbol groups. The device may determine first accumulated correlation information by adding the values. For example, the symbol groups may be at least one symbol group identified in the operation 1003. In addition, the device may combine values corresponding to the second correlation information of the symbol groups. The device may determine second accumulated correlation information by adding the values corresponding to the second correlation information. In addition, the device may combine values corresponding to the third correlation information of the symbol groups. The device may determine third accumulated correlation information by adding the values corresponding to the third correlation information. In addition, the device may combine values corresponding to the fourth correlation information of the symbol groups. The device may determine fourth accumulated correlation information by adding the values corresponding to the fourth correlation information.

The device may determine a total correlation value based on the first accumulated correlation information, the second accumulated correlation information, the third accumulated correlation information, and the fourth accumulated correlation information. The device may determine angle information of the total correlation value. For example, the device may determine the angle information through $arg(\cdot)$ corresponding to Equation 20. The device may obtain a phase change amount based on the number (e.g., M) of correlation calculations having different symbol lengths in the inter-symbol correlation information. The device may determine a frequency offset corresponding to the phase change amount.

In operation 1007, the device may obtain a random access signal based on the frequency offset. The device may obtain a compensated signal (hereinafter, a compensation signal) in a frequency domain by applying the frequency offset to received signals. The device may identify a sequence that provides a peak greater than or equal to a threshold value in a correlation calculation with the compensation signal. The device may obtain a random access signal corresponding to the sequence.

Although not illustrated in FIG. 10, the device may estimate a time offset based on the random access signal. The device may determine a timing advance (TA) corresponding to the time offset based on the compensation signal in which the frequency offset is compensated. In addition, the device may transmit a random access response to the NB-IoT UE to inform that the random access signal has been successfully obtained. For example, the device may transmit the random access response to the NB-IoT UE through the RU 220.

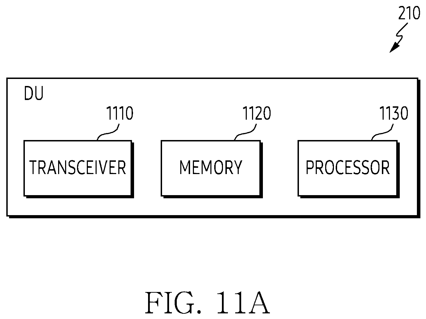

FIG. 11A illustrates a functional configuration of a DU (e.g., the DU 210) according to embodiments. A configuration exemplified in FIG. 11A, which is as a part of a base station, may be understood as a configuration of the DU 210 of FIG. 11A. Hereinafter, the terms '...unit' and '...er' used below refer to a unit processing at least one function or operation, which may be implemented by hardware or software, or a combination of hardware and software.

Referring to FIG. 11A, a DU 210 includes a transceiver 1110, memory 1120, and a processor 1130.

The transceiver 1110 may perform functions for transmitting and receiving a signal in a wired communication environment. The transceiver 1110 may include a wired interface for controlling a direct device-to-device connection through a transmission medium (e.g., copper wire, optical fiber). For example, the transceiver 1110 may transmit an electrical signal to another device through a copper wire or perform conversion between an electrical signal and an optical signal. The DU 210 may communicate with a radio unit (RU) through the transceiver 1110.

The transceiver 1110 may also perform functions for transmitting and receiving a signal in a wireless communication environment. For example, the transceiver 1110 may perform a conversion function between a baseband signal and a bit string according to a physical layer specification of a system. For example, upon transmitting data, the transceiver 1110 generates complex-valued symbols by encoding and modulating a transmission bit string. In addition, upon receiving data, the transceiver 1110 restores a received bit string by demodulating and decoding a baseband signal. In addition, the transceiver 1110 may include a plurality of transmission/reception paths.

The transceiver 1110 may transmit and receive a signal. For example, the transceiver 1110 may transmit a management plane (M-plane) message. For example, the transceiver 1110 may transmit a synchronization plane (S-plane) message. For example, the transceiver 1110 may transmit a control plane (C-plane) message. For example, the transceiver 1110 may transmit a user plane (U-plane) message. For example, the transceiver 1110 may receive the U-plane message. Although only the transceiver 1110 is illustrated in FIG. 11A, the DU 210 may include two or more transceivers according to another implementation.

The transceiver 1110 transmits and receives a signal as described above. Accordingly, all or some of the transceiver 1110 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the transceiver 1110. According to an embodiment, the transceiver 1110 may obtain signals on which physical layer processing has been performed, from the RU (e.g., an RU 220). For example, the transceiver 1110 may obtain a signal (e.g., a frequency domain signal) on which CP removal and FFT have been performed for the received signals.

Although not illustrated in FIG. 11A, the transceiver 1110 may further include a backhaul transceiver for connection with a core network or another base station. The backhaul transceiver provides an interface for performing communication with other nodes in the network. In other words, the backhaul transceiver converts a bit string transmitted from a base station to another node, such as another access node, another base station, an upper node, and a core network into a physical signal, and converts a physical signal received from another node into a bit string.

The memory 1120 stores a basic program, an application program, and data such as configuration information for an operation of the DU 210. The memory 1120 may be referred to as a storage unit. The memory 1120 may be configured with a volatile memory, a nonvolatile memory, or a combination of the volatile memory and the nonvolatile memory. In addition, the memory 1120 provides stored data according to a request from the processor 1130. According to an embodiment, the memory 1120 may store inter-symbol correlation information of the present disclosure. For example, the memory 1120 may store first correlation information (e.g., the first correlation information 751). The memory 1120 may store second correlation information (e.g., first correlation information 752). The memory 1120 may store third correlation information (e.g., the third correlation information 753). The memory 1120 may store fourth correlation information (e.g., the fourth correlation information 754)

The processor 1130 controls overall operations of the DU 210. The processor 1180 may be referred to as a control unit. For example, the processor 1130 transmits and receives a signal through the transceiver 1110 (or through a backhaul communication unit). In addition, the processor 1130 writes and reads data in the memory 1120. In addition, the processor 1130 may perform functions of a protocol stack required in a communication standard. Although only the processor 1130 is illustrated in FIG. 11A, the DU 210 may include two or more processors according to another implementation.

According to an embodiment, the processor 1130 may perform the physical layer processing on signals received from the RU (e.g., the RU 220). For example, the processor 1130 may perform subcarrier demapping (RE demapping) on the received signals. For example, the processor 1130 may calculate inter-symbol correlation information based on the received signals. In addition, for example, the processor 1130 may estimate a frequency offset based on the received signals. The processor 1130 may perform NPRACH detection on the received signals.

A configuration of the DU 210 illustrated in FIG. 11A is merely an example, and the example of the DU performing embodiments of the present disclosure is not limited to the configuration illustrated in FIG. 11A. In some embodiments, certain configurations may be added, deleted, or changed.

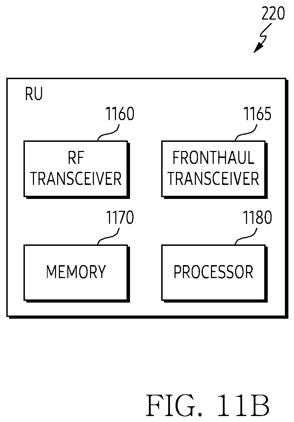

FIG. 11B illustrates a functional configuration of an RU (e.g., the RU 220) according to embodiments. A configuration exemplified in FIG. 11B, which is as a part of a base station, may be understood as a configuration of the RU 220 of FIG. 2. Hereinafter, the terms '...unit' and '...er' used below refer to a unit processing at least one function or operation, which may be implemented by hardware or software, or a combination of hardware and software.

Referring to FIG. 11B, the RU 220 includes an RF transceiver 1160, a fronthaul transceiver 1165, memory 1170, and a processor 1180.

The RF transceiver 1160 performs functions for transmitting and receiving a signal through a wireless channel. For example, the RF transceiver 1160 up-converts a baseband signal into an RF band signal and then transmits it through an antenna, and down-converts an RF band signal received through the antenna into a baseband signal. For example, the RF transceiver 1160 may include a transmission filter, a reception filter, an amplifier, a mixer, an oscillator, a DAC, an ADC.

The RF transceiver 1160 may include a plurality of transmission/reception paths. Furthermore, the RF transceiver 1160 may include an antenna unit. The RF transceiver 1160 may include at least one antenna array composed of a plurality of antenna elements. In terms of hardware, the RF transceiver 1160 may be composed of a digital circuit and an analog circuit (e.g., a radio frequency integrated circuit (RFIC)). Herein, the digital circuit and the analog circuit may be implemented as a single package. In addition, the RF transceiver 1160 may include a plurality of RF chains. The RF transceiver 1160 may perform beamforming. In order to provide directivity to a signal to be transmitted and received according to the setting of the processor 1180, the RF transceiver 1160 may apply beamforming weights to the signal. According to an embodiment, the RF transceiver 1160 may provide a plurality of antennas.

According to an embodiment, the RF transceiver 1160 may transmit and receive a signal on a radio access network. For example, the RF transceiver 1160 may transmit a downlink signal. The downlink signal may include a synchronization signal (SS), a reference signal (RS) (e.g., cell-specific reference signal (CRS), demodulation (DM)-RS), system information (e.g., MIB, SIB, remaining system information (RMSI), other system information (OSI)), configuration message, control information or downlink data. In addition, for example, the RF transceiver 1160 may receive an uplink signal. The uplink signal may include a random access-related signal (e.g., NPRACH, NPUSCH). According to an embodiment, the RF transceiver 1160 may receive signals including a random access signal through a plurality of antennas provided in the RF transceiver 1160. Although only the RF transceiver 1160 is illustrated in FIG. 11B, the RU 220 may include two or more RF transceivers according to another implementation.

The fronthaul transceiver 1165 may transmit and receive a signal. According to an embodiment, the fronthaul transceiver 1165 may transmit and receive a signal on a fronthaul interface. For example, the fronthaul transceiver 1165 may receive a management plane (M-plane) message. For example, the fronthaul transceiver 1165 may receive a synchronization plane (S-plane) message. For example, the fronthaul transceiver 1165 may receive a control plane (C-plane) message. For example, the fronthaul transceiver 1165 may transmit a user plane (U-plane) message. For example, the fronthaul transceiver 1165 may receive a U-plane message. According to an embodiment, the fronthaul transceiver 1165 may transmit a signal (e.g., a frequency domain signal) on which CP removal and FFT have been performed, to the DU (e.g., the DU 210). Although only the fronthaul transceiver 1165 is illustrated in FIG. 11B, the RU 220 may include two or more fronthaul transceivers according to another implementation.

As described above, the RF transceiver 1160 and the fronthaul transceiver 1165 transmit and receive a signal. Accordingly, all or some of the RF transceiver 1160 and the fronthaul transceiver 1165 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the RF transceiver 1160. In the following description, transmission and reception performed through a wireless channel are used to the meaning including that the processing as described above is performed by the RF transceiver 1160.

The memory 1170 stores a basic program, an application program, and data such as configuration information for an operation of the RU 220. The memory 1170 may be referred to as a storage unit. The memory 1170 may be configured with a volatile memory, a nonvolatile memory, or a combination of the volatile memory and the nonvolatile memory. In addition, the memory 1170 provides stored data according to a request from the processor 1180.

The processor 1180 controls overall operations of the RU 220. The processor 1180 may be referred to as a control unit. For example, the processor 1180 transmits and receives a signal through the RF transceiver 1160 or the fronthaul transceiver 1165. In addition, the processor 1180 writes and reads data in the memory 1170. In addition, the processor 1180 may perform functions of a protocol stack required by a communication standard. Although only the processor 1180 is illustrated in FIG. 11B, the RU 220 may include two or more processors according to another implementation. The processor 1180, which is an instruction set or code stored in the memory 1170, may be an instruction/code at least temporarily resided in the processor 1180 or a storage space storing instruction/code, or part of circuitry constituting the processor 1180. In addition, the processor 1180 may include various modules for performing communication. The processor 1180 may control the RU 220 to perform operations according to embodiments to be described later.

A configuration of the RU 220 illustrated in FIG. 11B is only an example, and an example of the RU performing the embodiments of the present disclosure is not limited to the configuration illustrated in FIG. 11B. In some embodiment, some configurations may be added, deleted, or changed.

In a 3GPP NB-IoT system, an NPRACH transmission is used to obtain synchronization of uplink timing. The NPRACH transmission may include a plurality of repeated transmissions (e.g., repetitions of a preamble transmission and repetitions of symbol groups within the preamble transmission) in a single-tone. In order to prevent deterioration in reception performance due to a frequency difference when receiving a random access signal of NPRACH at the base station side, a technique for determining a frequency offset is described in the present disclosure. In particular, instead of estimating both a time offset and a frequency offset together, which involves high complexity, an amount of calculation may be reduced by first estimating and compensating the frequency offset and then estimating the time offset. In addition, the present disclosure may improve an efficiency of a reception operation by reducing the amount of calculation of a modem-side (e.g., the DU 210) and enhancing reception performance based on a characteristic of NPRACH in which transmission is repeated in a single-tone.

The effects that can be obtained from the present disclosure are not limited to those described above, and any other effects not mentioned herein will be clearly understood by those having ordinary knowledge in the art to which the present disclosure belongs, from the following description.

In embodiments, a method performed by a device of a base station is provided. The method may comprise obtaining signals corresponding to a plurality of symbol groups of a narrowband random access channel (NPRACH) transmission. The method may comprise determining inter-symbol correlation information for at least one symbol group among the plurality of symbol groups. The method may comprise determining a frequency offset based on the inter-symbol correlation information. The method may comprise obtaining a random access signal corresponding to the signals based on the frequency offset. Symbols within each symbol group among the plurality of symbol groups may correspond to a same subcarrier.

According to an embodiment, one symbol group among the plurality of symbol groups may include five symbols. The plurality of symbol groups may include four symbol groups corresponding to a preamble and symbol groups corresponding to repetitions of the four symbol groups. Information on the number of repetitions of the four symbol groups within the plurality of symbol groups may be configured for a user equipment (UE) for the NPRACH transmission.

According to an embodiment, determining the inter-symbol correlation information may comprise obtaining first correlation information between adjacent symbols for each symbol group. Determining the inter-symbol correlation information may comprise obtaining second correlation information between symbols spaced apart by one symbol for each symbol group. Determining the inter-symbol correlation information may comprise obtaining third correlation information between symbols spaced apart by two symbols for each symbol group. Determining the inter-symbol correlation information may comprise obtaining fourth correlation information between symbols spaced apart by three symbols for each symbol group.

According to an embodiment, determining the frequency offset may comprise obtaining a first accumulated correlation value based on a sum of values of the first correlation information between adjacent symbols for the plurality of symbol groups. Determining the frequency offset may comprise obtaining a second accumulated correlation value based on a sum of values of second correlation information between symbols spaced apart by two symbols for the plurality of symbol groups. Determining the frequency offset may comprise obtaining a third accumulated correlation value based on a sum of values of third correlation information between symbols spaced apart by three symbols for the plurality of symbol groups. Determining the frequency offset may comprise obtaining a fourth accumulated correlation value based on a sum of values of fourth correlation information between symbols spaced apart by four symbols for the plurality of symbol groups. Determining the frequency offset may comprise obtaining a total correlation value based on the first accumulated correlation value, the second accumulated correlation value, the third accumulated correlation value, and the fourth accumulated correlation value.

According to an embodiment, determining the frequency offset may include obtaining angle information for the total correlation value. Determining the frequency offset may include determining the frequency offset by performing scaling on the angle information. The scaling may be determined based on the number of correlation calculations corresponding to different symbol lengths in the inter-symbol correlation information.

According to an embodiment, a first scaling value of 1/4 to the sum of the first correlation information values may be applied for the first accumulated correlation value. A second scaling value of 1/3 to the sum of the second correlation information values may be applied for the second accumulated correlation value. A third scaling value of 1/2 to the sum of the third correlation information values may be applied for the third accumulated correlation value.

According to an embodiment, the plurality of symbol groups may correspond to repetitions according to the number of repetitions configured for the NPRACH transmission. The at least one symbol group may correspond to a subset among the repetitions.

According to an embodiment, the plurality of symbol groups may correspond to repetitions according to the number of repetitions configured for the NPRACH transmission. The at least one symbol group may correspond to a subset of four symbol groups of each repetition among the repetitions.

According to an embodiment, obtaining the random access signal may include obtaining a compensation signal based on the signals and the frequency offset. Obtaining the random access signal may include identifying, among a plurality of sequences, a sequence having a peak greater than or equal to a threshold value in a correlation calculation with the compensation signal. The sequence may correspond to the random access signal.

According to an embodiment, the device may include a distributed unit (DU). The frequency offset may be determined for each antenna of a radio unit (RU) connected to the device. The signals may be obtained from the RU.

In embodiments, a device of a base station is provided. The device may include memory, at least one transceiver, and at least one processor coupled to the memory and the at least one transceiver. The at least one processor may be configured to obtain signals corresponding to a plurality of symbol groups of a narrowband random access channel (NPRACH) transmission. The at least one processor may be configured to determine inter-symbol correlation information for at least one symbol group among the plurality of symbol groups. The at least one processor may be configured to determine a frequency offset based on the inter-symbol correlation information. The at least one processor may be configured to obtain a random access signal corresponding to the signals based on the frequency offset. Symbols within each symbol group among the plurality of symbol groups may correspond to a same subcarrier.

According to an embodiment, one symbol group among the plurality of symbol groups may include five symbols. The plurality of symbol groups may include four symbol groups corresponding to a preamble and symbol groups corresponding to repetitions of the four symbol groups. Information on the number of repetitions of the four symbol groups within the plurality of symbol groups may be configured for a user equipment (UE) for the NPRACH transmission.

According to an embodiment, the at least one processor may be configured to obtain first correlation information between adjacent symbols for each symbol group to determine the inter-symbol correlation information. The at least one processor may be configured to obtain second correlation information between symbols spaced apart by one symbol for each symbol group to determine the inter-symbol correlation information. The at least one processor may be configured to obtain third correlation information between symbols spaced apart by two symbols for each symbol group to determine the inter-symbol correlation information. The at least one processor may be configured to obtain fourth correlation information between symbols spaced apart by three symbols for each symbol group to determine the inter-symbol correlation information.

According to an embodiment, the at least one processor may be configured to obtain a first accumulated correlation value based on a sum of values of the first correlation information between adjacent symbols for the plurality of symbol groups to determine the frequency offset. The at least one processor may be configured to obtain a second accumulated correlation value based on a sum of values of second correlation information between symbols spaced apart by two symbols for the plurality of symbol groups to determine the frequency offset. The at least one processor may be configured to obtain a third accumulated correlation value based on a sum of values of third correlation information between symbols spaced apart by three symbols for the plurality of symbol groups to determine the frequency offset. The at least one processor may be configured to obtain a fourth accumulated correlation value based on a sum of values of fourth correlation information between symbols spaced apart by four symbols for the plurality of symbol groups to determine the frequency offset. The at least one processor may be configured to obtain a total correlation value based on the first accumulated correlation value, the second accumulated correlation value, the third accumulated correlation value, and the fourth accumulated correlation value to determine the frequency offset.

According to an embodiment, the at least one processor may be configured to obtain angle information for the total correlation value to determine the frequency offset. The at least one processor may be configured to determine the frequency offset by performing scaling on the angle information to determine the frequency offset. The scaling may be determined based on the number of correlation calculations corresponding to different symbol lengths in the inter-symbol correlation information.

According to an embodiment, a first scaling value of 1/4 to the sum of the first correlation information values may be applied for the first accumulated correlation value. A second scaling value of 1/3 to the sum of the second correlation information values may be applied for the second accumulated correlation value. A third scaling value of 1/2 to the sum of the third correlation information values may be applied for the third accumulated correlation value.

According to an embodiment, the plurality of symbol groups may correspond to repetitions according to the number of repetitions configured for the NPRACH transmission. The at least one symbol group may correspond to a subset among the repetitions.

According to an embodiment, the plurality of symbol groups may correspond to repetitions according to the number of repetitions configured for the NPRACH transmission. The at least one symbol group may correspond to a subset of four symbol groups of each repetition among the repetitions.

According to an embodiment, the at least one processor may be configured to obtain a compensation signal based on the signals and the frequency offset to obtain the random access signal. The at least one processor may be configured to identify, among a plurality of sequences, a sequence having a peak greater than or equal to a threshold value in a correlation calculation with the compensation signal to obtain the random access signal. The sequence may correspond to the random access signal.

According to an embodiment, the device may include a distributed unit (DU). The frequency offset may be determined for each antenna of a radio unit (RU) connected to the device. The signals may be obtained from the RU.

In embodiments, a digital unit (DU) is provided. The DU may comprise memory storing instructions, at least one transceiver, and at least one processor. The instructions, when executed by the at least one processor, may cause the DU to obtain signals corresponding to a plurality of symbol groups of a narrowband random access channel (NPRACH) transmission, determine inter-symbol correlation information for at least one symbol group among the plurality of symbol groups, determine a frequency offset based on the inter-symbol correlation information, and obtain a random access signal corresponding to the signals based on the frequency offset, wherein symbols within each symbol group among the plurality of symbol groups may correspond to a same subcarrier.

According to an embodiment, the instructions, when executed by the at least one processor, in order to determine the inter-symbol correlation information, may cause the DU to obtain first correlation information between adjacent symbols for each symbol group, obtain second correlation information between symbols spaced apart by one symbol for each symbol group, obtain third correlation information between symbols spaced apart by two symbols for each symbol group, and obtain fourth correlation information between symbols spaced apart by three symbols for each symbol group.

According to an embodiment, the instructions, when executed by the at least one processor, in order to determine the frequency offset, may cause the DU to obtain a first accumulated correlation value based on a sum of values of the first correlation information between adjacent symbols for the plurality of symbol groups, obtain a second accumulated correlation value based on a sum of values of second correlation information between symbols spaced apart by two symbols for the plurality of symbol groups, obtain a third accumulated correlation value based on a sum of values of third correlation information between symbols spaced apart by three symbols for the plurality of symbol groups, obtain a fourth accumulated correlation value based on a sum of values of fourth correlation information between symbols spaced apart by four symbols for the plurality of symbol groups, and obtain a total correlation value based on the first accumulated correlation value, the second accumulated correlation value, the third accumulated correlation value, and the fourth accumulated correlation value.

According to an embodiment, the instructions, when executed by the at least one processor, in order to determine the frequency offset, may cause the DU to obtain angle information for the total correlation value and determine the frequency offset by performing scaling on the angle information, wherein the scaling may be determined based on the number of correlation calculations corresponding to different symbol lengths in the inter-symbol correlation information.

According to an embodiment, the instructions, when executed by the at least one processor, in order to obtain the random access signal, may cause the DU to obtain a compensation signal based on the signals and the frequency offset and identify, among a plurality of sequences, a sequence having a peak greater than or equal to a threshold value in a correlation calculation with the compensation signal, wherein the sequence may correspond to the random access signal.

In embodiments, a non-transitory computer readable storage medium is provided. The non-transitory computer readable storage medium may store instructions that, when executed by a processor of a digital unit (DU), cause the DU to perform operations including obtaining signals corresponding to a plurality of symbol groups of a narrowband random access channel (NPRACH) transmission, determining inter-symbol correlation information for at least one symbol group among the plurality of symbol groups, determining a frequency offset based on the inter-symbol correlation information, and obtaining a random access signal corresponding to the signals based on the frequency offset. Symbols within each symbol group among the plurality of symbol groups may correspond to a same subcarrier.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software including one or more instructions that are stored in a storage medium that is readable by a machine. For example, a processor of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), an optical storage device (digital versatile discs (DVDs) or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

**Claims**

1. A digital unit (DU), comprising:

   memory storing instructions;
   at least one transceiver;
   at least one processor;
   wherein the instructions, when executed by the at least one processor, cause the DU to:

   obtain signals corresponding to a plurality of symbol groups of a narrowband random access channel (NPRACH) transmission;
   determine inter-symbol correlation information for at least one symbol group among the plurality of symbol groups;
   determine a frequency offset based on the inter-symbol correlation information; and
   obtain a random access signal corresponding to the signals based on the frequency offset, and
   wherein symbols within each symbol group among the plurality of symbol groups correspond to a same subcarrier.

2. The DU of claim 1,

   wherein one symbol group among the plurality of symbol groups includes five symbols,
   wherein the plurality of symbol groups include four symbol groups corresponding to a preamble and symbol groups corresponding to repetitions of the four symbol groups, and
   wherein information on the number of repetitions of the four symbol groups within the plurality of symbol groups is configured for a user equipment (UE) for the NPRACH transmission.

3. The DU of claim 1,
   wherein the instructions, when executed by the at least one processor, cause the DU to determine the inter-symbol correlation information by:

   obtaining first correlation information between adjacent symbols for each symbol group;
   obtaining second correlation information between symbols spaced apart by one symbol for each symbol group;
   obtaining third correlation information between symbols spaced apart by two symbols for each symbol group; and
   obtaining fourth correlation information between symbols spaced apart by three symbols for each symbol group.

4. The DU of claim 3,
   wherein the instructions, when executed by the at least one processor, cause the DU to determine the frequency offset by:

   obtaining a first accumulated correlation value based on a sum of values of the first correlation information between adjacent symbols for the plurality of symbol groups;
   obtaining a second accumulated correlation value based on a sum of values of second correlation information between symbols spaced apart by two symbols for the plurality of symbol groups;
   obtaining a third accumulated correlation value based on a sum of values of third correlation information between symbols spaced apart by three symbols for the plurality of symbol groups;
   obtaining a fourth accumulated correlation value based on a sum of values of fourth correlation information between symbols spaced apart by four symbols for the plurality of symbol groups; and
   obtaining a total correlation value based on the first accumulated correlation value, the second accumulated correlation value, the third accumulated correlation value, and the fourth accumulated correlation value.

**5.** The DU of claim 4,
wherein the instructions, when executed by the at least one processor, cause the DU to determine the frequency offset by:

> obtaining angle information for the total correlation value; and
> determine the frequency offset by performing scaling on the angle information, and
> wherein the scaling is determined based on the number of correlation calculations corresponding to different symbol lengths in the inter-symbol correlation information.

**6.** The DU of claim 4,

> wherein a first scaling factor of 1/4 to the sum of the first correlation information values is applied for the first accumulated correlation value,
> wherein a second scaling factor of 1/3 to the sum of the second correlation information values is applied for the second accumulated correlation value, and
> wherein a third scaling factor of 1/2 to the sum of the third correlation information values is applied for the third accumulated correlation value.

**7.** The DU of claim 1,

> wherein the plurality of symbol groups correspond to repetitions according to the number of repetitions configured for the NPRACH transmission, and
> wherein the at least one symbol group corresponds to a subset among the repetitions.

**8.** The DU of claim 1,

> wherein the plurality of symbol groups correspond to repetitions according to the number of repetitions configured for the NPRACH transmission, and
> wherein the at least one symbol group corresponds to a subset of four symbol groups of each repetition among the repetitions.

**9.** The DU of claim 1,
wherein the instructions, when executed by the at least one processor, cause the DU to obtain the random access signal by:

> obtaining a compensation signal based on the signals and the frequency offset; and
> identifying, among a plurality of sequences, a sequence having a peak greater than or equal to a threshold value in a correlation calculation with the compensation signal; and
> wherein the sequence corresponds to the random access signal.

**10.** The DU of claim 1,

> wherein the frequency offset is determined for each antenna of a radio unit (RU) connected to the device, and
> wherein the signals are obtained from the RU.

**11.** A method performed by a digital unit (DU), the method comprising:

> obtaining signals corresponding to a plurality of symbol groups of a narrowband random access channel (NPRACH) transmission;
> determining inter-symbol correlation information for at least one symbol group among the plurality of symbol groups;
> determining a frequency offset based on the inter-symbol correlation information; and
> obtaining a random access signal corresponding to the signals based on the frequency offset, and
> wherein symbols within each symbol group among the plurality of symbol groups correspond to a same subcarrier.

**12.** The method of claim 11,

wherein one symbol group among the plurality of symbol groups includes five symbols,

wherein the plurality of symbol groups include four symbol groups corresponding to a preamble and symbol groups corresponding to repetitions of the four symbol groups, and

wherein information on the number of repetitions of the four symbol groups within the plurality of symbol groups is configured for a user equipment (UE) for the NPRACH transmission.

13. The method of claim 11,
wherein the determining the inter-symbol correlation information comprises:

obtaining first correlation information between adjacent symbols for each symbol group;

obtaining second correlation information between symbols spaced apart by one symbol for each symbol group;

obtaining third correlation information between symbols spaced apart by two symbols for each symbol group; and

obtaining fourth correlation information between symbols spaced apart by three symbols for each symbol group.

14. The method of claim 13,
wherein the determining the frequency offset comprises:

obtaining a first accumulated correlation value based on a sum of values of the first correlation information between adjacent symbols for the plurality of symbol groups;

obtaining a second accumulated correlation value based on a sum of values of second correlation information between symbols spaced apart by two symbols for the plurality of symbol groups;

obtaining a third accumulated correlation value based on a sum of values of third correlation information between symbols spaced apart by three symbols for the plurality of symbol groups;

obtaining a fourth accumulated correlation value based on a sum of values of fourth correlation information between symbols spaced apart by four symbols for the plurality of symbol groups;

and obtaining a total correlation value based on the first accumulated correlation value, the second accumulated correlation value, the third accumulated correlation value, and the fourth accumulated correlation value.

15. A non-transitory computer readable storage medium storing instructions that, when executed by a processor of a digital unit (DU), cause the DU to perform operations including:

obtaining signals corresponding to a plurality of symbol groups of a narrowband random access channel (NPRACH) transmission;

determining inter-symbol correlation information for at least one symbol group among the plurality of symbol groups;

determining a frequency offset based on the inter-symbol correlation information; and

obtaining a random access signal corresponding to the signals based on the frequency offset, and

wherein symbols within each symbol group among the plurality of symbol groups correspond to a same subcarrier.

110

120

FIG. 1

FIG. 2

RADIO FRAME (314)

SLOT (306)

RESOURCE ELEMENT (312)

RESOURCE BLOCK (308)

$N_{RB}^{DL}$ OR $N_{RB}^{UL}$ SUBCARRIERS (304)

$N_{SC}^{RB}$ SUBCARRIERS (310)

$N_{symb}$ OFDM SYMBOLS (302)

FIG. 3

120 TERMINAL

110 BASE STATION

RACH MSG1 (NPRACH) 401

RACH Response MSG2 (NPDSCH) 402

Scheduled Transmission MSG3 (NPUSCH) 403

Contention Resolution MSG4(NPDSCH) 404

FIG. 4

FIG. 5

Antenna

| 611 | 613 | 615 | 617 | | 619 |
|-----|-----|-----|-----|---|-----|
| GAP&CP remover | Freq. shifter | AGC | FFT | | Subcarrier demapping |

| 621 | 625 |
|-----|-----|
| Subcarrier buffering | Frequency offset Compensator |

623

Frequency offset estimator

FIG. 6

FIG. 7A

FIG. 7B

FIG. 8

FIG. 9

OBTAIN SIGNALS CORRESPONDING TO PLURALITY OF SYMBOL GROUPS OF NPRACH TRANSMISSION ─1001

DETERMINE INTER-SYMBOL CORRELATION INFORMATION FOR AT LEAST ONE SYMBOL GROUP ─1003

DETERMINE FREQUENCY OFFSET BASED ON INTER-SYMBOL CORRELATION INFORMATION ─1005

OBTAIN RANDOM ACCESS SIGNAL BASED ON FREQUENCY OFFSET ─1007

FIG. 10

210

DU

1110 · TRANSCEIVER

1120 · MEMORY

1130 · PROCESSOR

FIG. 11A

220

RU

1160

RF
TRANSCEIVER

1165

FRONTHAUL
TRANSCEIVER

1170

MEMORY

1180

PROCESSOR

FIG. 11B

## INTERNATIONAL SEARCH REPORT

| International application No. |
|---|
| **PCT/KR2024/000232** |

**A.  CLASSIFICATION OF SUBJECT MATTER**

**H04W 74/08**(2009.01)i; **H04W 74/00**(2009.01)i; **H04L 5/00**(2006.01)i

According to International Patent Classification (IPC) or to both national classification and IPC

**B.  FIELDS SEARCHED**

Minimum documentation searched (classification system followed by classification symbols)

H04W 74/08(2009.01); H04B 17/318(2015.01); H04L 27/26(2006.01); H04L 5/00(2006.01); H04W 64/00(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 협대역 랜덤 액세스 채널(NPRACH), 심볼 그룹(symbol group), 인터 심볼(inter symbol), 상관정보(correlation), 동일 서브캐리어(same subcarrier)

**C.  DOCUMENTS CONSIDERED TO BE RELEVANT**

| Category* | Citation of document, with indication, where appropriate, of the relevant passages | Relevant to claim No. |
|---|---|---|
| A | KR 10-2018-0093165 A (ELECTRONICS AND TELECOMMUNICATIONS RESEARCH INSTITUTE) 21 August 2018 (2018-08-21)<br>See paragraphs [0035]-[0036] and [0043]; and figures 2-3. | 1-15 |
| A | WO 2022-088070 A1 (HUAWEI TECHNOLOGIES CO., LTD. et al.) 05 May 2022 (2022-05-05)<br>See claims 1-4. | 1-15 |
| A | KR 10-2020-0029612 A (SAMSUNG ELECTRONICS CO., LTD.) 18 March 2020 (2020-03-18)<br>See paragraphs [0043]-[0066]. | 1-15 |
| A | US 2021-0168870 A1 (NOKIA TECHNOLOGIES OY) 03 June 2021 (2021-06-03)<br>See claim 18. | 1-15 |
| A | KR 10-2020-0035455 A (HUAWEI TECHNOLOGIES CO., LTD.) 03 April 2020 (2020-04-03)<br>See paragraphs [0052]-[0067]; and figure 1. | 1-15 |

☐ Further documents are listed in the continuation of Box C.  ☑ See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "D"  document cited by the applicant in the international application | "X"  document of particular relevance; the claimed invention cannot be considered novel or cannot be considered to involve an inventive step when the document is taken alone |
| "E"  earlier application or patent but published on or after the international filing date | |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **19 April 2024** | **22 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2024/000232**

| Patent document cited in search report | | | Publication date (day/month/year) | Patent family member(s) | | | Publication date (day/month/year) |
|---|---|---|---|---|---|---|---|
| KR | 10-2018-0093165 | A | 21 August 2018 | KR | 10-2625779 | B1 | 17 January 2024 |
| WO | 2022-088070 | A1 | 05 May 2022 | None | | | |
| KR | 10-2020-0029612 | A | 18 March 2020 | CN | 109392106 | A | 26 February 2019 |
| | | | | CN | 109392159 | A | 26 February 2019 |
| | | | | EP | 3659382 | A1 | 03 June 2020 |
| | | | | US | 11272546 | B2 | 08 March 2022 |
| | | | | US | 11785646 | B2 | 10 October 2023 |
| | | | | US | 2020-0383144 | A1 | 03 December 2020 |
| | | | | US | 2022-0150978 | A1 | 12 May 2022 |
| | | | | US | 2023-0403747 | A1 | 14 December 2023 |
| | | | | WO | 2019-031834 | A1 | 14 February 2019 |
| US | 2021-0168870 | A1 | 03 June 2021 | CN | 111602458 | A | 28 August 2020 |
| | | | | CN | 111602458 | B | 09 May 2023 |
| | | | | EP | 3732926 | A1 | 04 November 2020 |
| | | | | EP | 3732926 | B1 | 20 September 2023 |
| | | | | US | 11265923 | B2 | 01 March 2022 |
| | | | | WO | 2019-127396 | A1 | 04 July 2019 |
| KR | 10-2020-0035455 | A | 03 April 2020 | BR | 112020002795 | A2 | 28 July 2020 |
| | | | | CA | 3072681 | A1 | 14 February 2019 |
| | | | | CN | 109039978 | A | 18 December 2018 |
| | | | | CN | 109039979 | A | 18 December 2018 |
| | | | | EP | 3605982 | A1 | 05 February 2020 |
| | | | | EP | 3605982 | B1 | 26 May 2021 |
| | | | | EP | 3934190 | A1 | 05 January 2022 |
| | | | | EP | 3934190 | B1 | 07 June 2023 |
| | | | | EP | 3934190 | C0 | 07 June 2023 |
| | | | | EP | 4271091 | A2 | 01 November 2023 |
| | | | | JP | 2020-530966 | A | 29 October 2020 |
| | | | | JP | 7077397 | B2 | 30 May 2022 |
| | | | | MX | 2020001642 | A | 03 August 2020 |
| | | | | US | 11757688 | B2 | 12 September 2023 |
| | | | | US | 2019-0149377 | A1 | 16 May 2019 |
| | | | | US | 2020-0274745 | A1 | 27 August 2020 |
| | | | | US | 2022-0407753 | A1 | 22 December 2022 |
| | | | | US | 2024-0073075 | A1 | 29 February 2024 |
| | | | | WO | 2019-029326 | A1 | 14 February 2019 |

Form PCT/ISA/210 (patent family annex) (July 2022)